# EUROPEAN PATENT APPLICATION

(11) **EP 2 559 957 A2**
(43) Date of publication of application: **20.02.2013**
(21) Application number: 12180335.7
(22) Date of filing: 13.08.2012
(51) Int. Cl.: F24J 3/06, F28D 20/00, F24J 3/08

(54) **Open-loop natural thermal energy releasing system with partial reflux**

(30) Priority: 15.08.2011 US 201113209571; 24.08.2011 US 201113216462
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

An open-loop type heat equalization device utilizing the heat exchange fluid to transmit the thermal energy of a natural thermal energy storage body to an external temperature differentiation body, and including one or more than one of following structural devices, including: 1) installing the space limiting and flow direction guiding structure (201) for allowing the thermal energy fluid to be released from the fluid inlet/outlet port (4011), and a part thereof is returned to the fluid inlet/outlet port (3012) then flowing back to the heat gaining device (101); 2) installing an outward-expanding arc-shaped fluid chamber (108) at turning locations of the flowpath; 3) installing an auxiliary heating/cooling device (115); 4) installing an auxiliary fluid pump (107); 5) installing a heat exchange fluid temperature sensing device (TS201); 6) installing an environment temperature sensing device (TS202); and 7): installing an electric power control unit (ECU200).

## Description

### BACKGROUND OF THE INVENTION

### (a) Field of the Invention

The present invention is to utilize the thermal energy of a natural thermal energy storage body (100) to be transmitted to a heat exchange fluid (104) in a heat gaining device (101) installed at the bottom of the open-loop natural thermal energy releasing system with partial reflux, and with the cold descending/hot ascending effect provided by the heat exchange fluid (104) after being processed with temperature equalization or the pumping of an auxiliary fluid pump, the heat exchange fluid (104) in the heat gaining device (101) is enabled to release the thermal energy in the omni-direction or in a set direction from a fluid inlet/outlet port (4011) of a pipeline structure (401) to the interior of a space limiting and flow direction guiding structure (201) to be received with the heat releasing from the heat exchange fluid (104).

### (b) Description of the Prior Art

A conventional open-loop temperature equalization device utilizes the thermal energy of a natural thermal energy storage body to transmit thermal energy to an external temperature differentiation body through adopting a heat exchange fluid as a carrier, and an open state is often formed between the fluid inlet/outlet port (4011) of the pipeline structure (401) and the fluid inlet/outlet port (3012) of the pipeline structure (301), and the space limiting and flow direction guiding structure (201) of the heat exchange fluid (104) is not provided, thereby thermal energy from the heat gaining device (101) is dispersed.

### SUMMARY OF THE INVENTION

The present invention is to install the open-loop natural thermal energy releasing system with partial reflux in a natural thermal energy storage body (100) which is constituted by a solid or liquid heat storage body having greater and stable heat storage capacity such as a stratum, ground, lake, pool, river, desert, berg and ocean, for storing thermal energy through the natural heat storage body so as to transmit the thermal energy to a heat exchange fluid (104) in a heat gaining device (101) installed at the bottom of the open-loop natural thermal energy releasing system with partial reflux, and the main features includes one or more than one of the 1) to 7) structural devices including: 1) installing the space limiting and flow direction guiding structure (201) of the heat exchange fluid (104) between the fluid inlet/outlet port (4011) of the pipeline structure (401) and a fluid inlet/outlet port (3012) of a pipeline structure (301) for allowing the heat exchange fluid (104) with thermal energy to be released from the fluid inlet/outlet port (4011) of the pipeline structure (401), and a part thereof is returned to the fluid inlet/outlet port (3012) of the pipeline structure (301) for flowing back to the heat gaining device (101); 2) installing an outward-expanding arc-shaped fluid chamber (108) at one or more than one of turning locations of the open-loop flowpath configured by the heat gaining device (101), the pipeline structure (301), the space limiting and flow direction guiding structure (201) and the pipeline structure (401) for temporally storing a part of the heat exchange fluid (104) and moderating the flow speed of the heat exchange fluid (104) with thermal energy for reducing the flow damping of the flowpath to the heat exchange fluid (104); 3) installing an auxiliary heating/cooling device (115); 4) installing an auxiliary fluid pump (107); 5) installing a heat exchange fluid temperature sensing device (TS201); 6) installing an environment temperature sensing device (TS202); and 7) installing an electric power control unit (ECU200).

According to a second aspect of the invention, an open-loop type heat exchange device comprises a heat exchange unit (101) for taking heat from a natural thermal energy storage body using a heat exchange fluid flowing through the device, the heat exchange device including at least one of the following structural devices:
1) a space limiting and flow direction guiding structure (201) for allowing the thermal energy fluid to be released from the fluid inlet/outlet port (4011), a part of it being returned to the fluid inlet/outlet port (3012) to flow back into the heat exchanger unit (101);
2) an outwardly expanding arc shaped fluid chamber (108) disposed at locations of the flow path of the heat exchange fluid where the flow path changes direction;
3) an auxiliary heating/cooling device (115);
4) an auxiliary fluid pump (107);
5) a heat exchange fluid temperature sensing device (TS201);
6) an environment temperature sensing device (TS202); and
7) an electric power control unit (ECU 200).

Preferably, the heat exchange fluid is air.

### BRIEF DESCRIPTION OF THE DRAWINGS

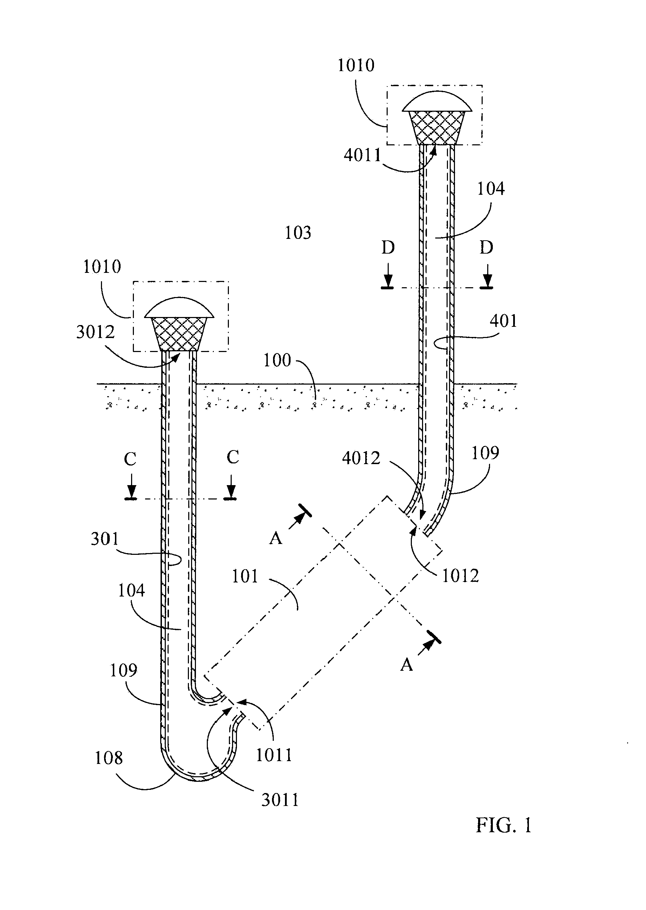

FIG 1 is a schematic structural view showing an outward-expanding arc-shaped fluid chamber (108) being installed between the linear pipeline structure (301) and the heat gaining device (101) for being leaded to the upward-inclined heat gaining device (101) and the pipeline structure (401), according to one embodiment of the present invention.

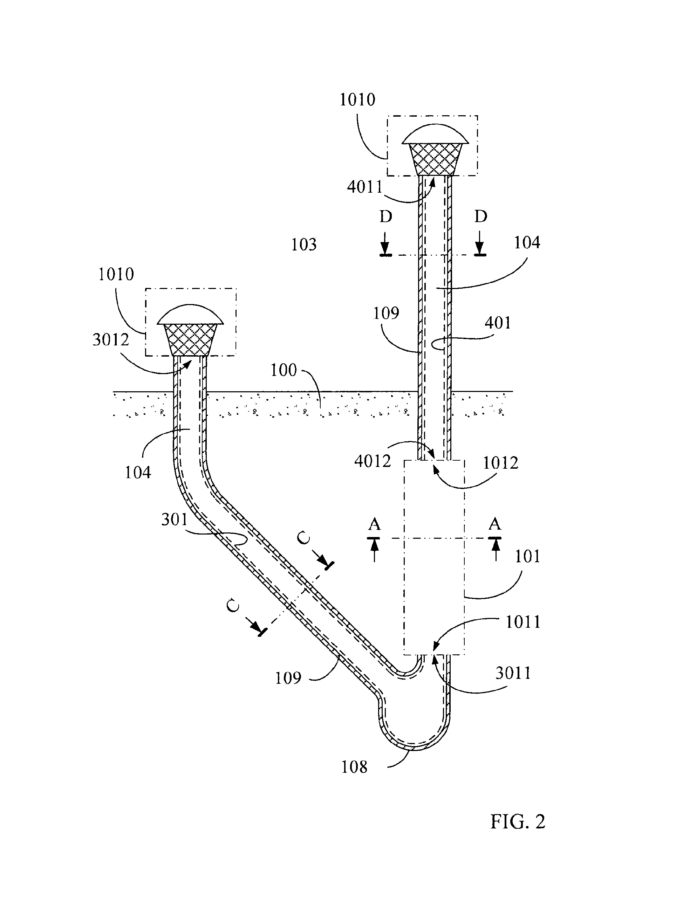

FIG 2 is a schematic structural view showing the outward-expanding arc-shaped fluid chamber (108) being installed between the linear pipeline structure (301) and the heat gaining device (101) for being leaded to the vertical heat gaining device (101) and the pipeline structure (401), according to one embodiment of the present invention.

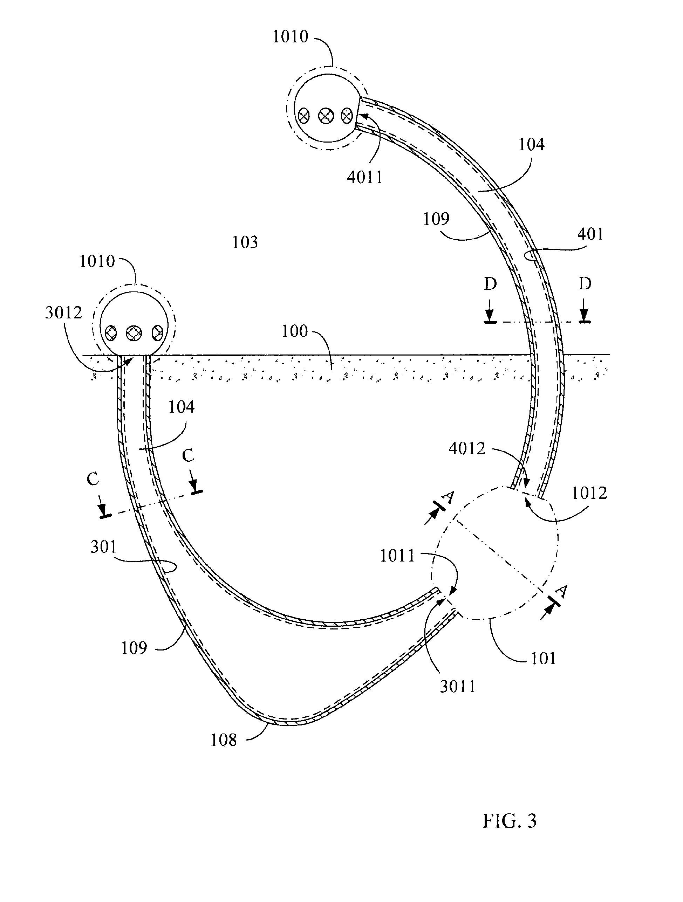

FIG 3 is a schematic structural view showing the outward-expanding arc-shaped fluid chamber (108) being installed between the arc-shaped pipeline structure (301) and the heat gaining device (101) for being leaded to the upward-inclined heat gaining device (101) and the arc-shaped pipeline structure (401), according to one embodiment ofthe present invention.

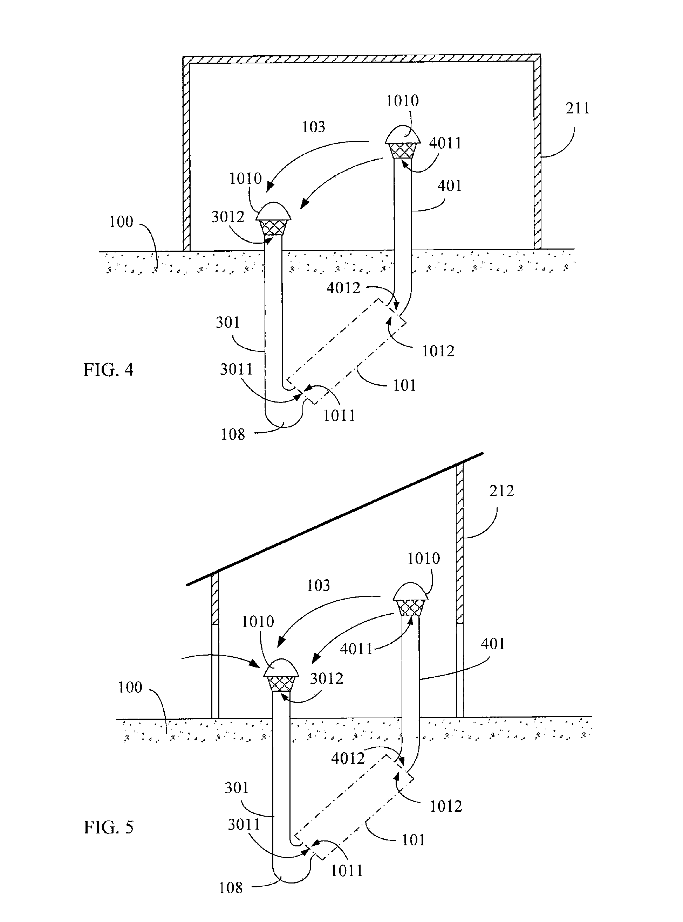

FIG. 4 is a lateral structural view showing the present invention being provided with the linear pipeline structure (301), wherein the bottom thereof being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.
FIG. 5 is a lateral structural view showing the embodiment shown in FIG. 4 being provided with a semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

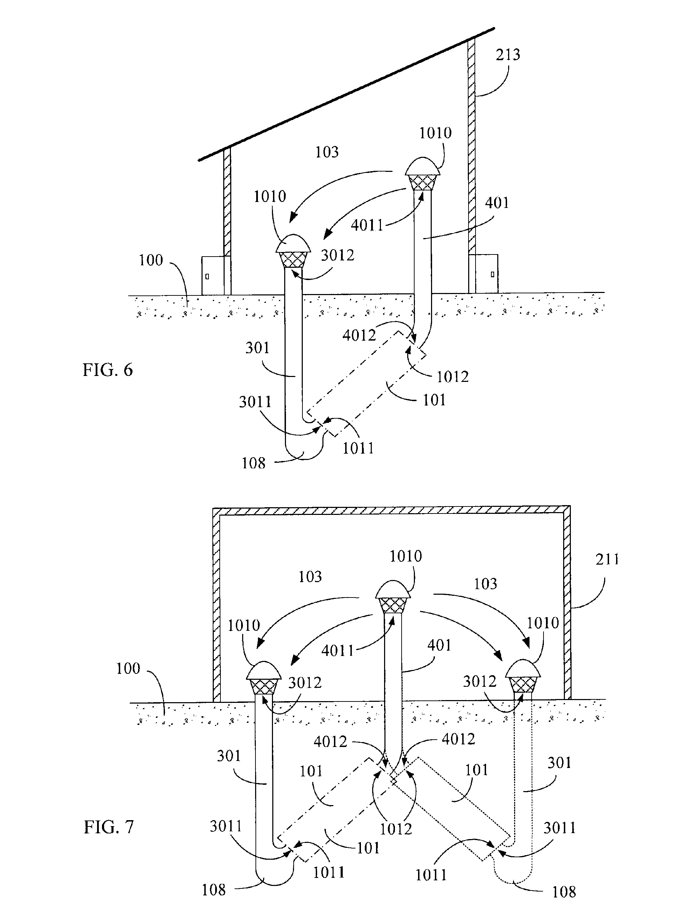

FIG. 6 is a lateral structural view showing the embodiment shown in FIG. 4 being provided with a space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.
FIG. 7 is a lateral structural view showing the present invention being provided with the linear pipeline structure (301), and the pipeline structures (401) of at least two open-loop natural thermal energy releasing systems with partial reflux being staggeringly disposed in the natural thermal energy storage body (100), wherein the bottom of each open-loop natural thermal energy releasing system with partial reflux being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

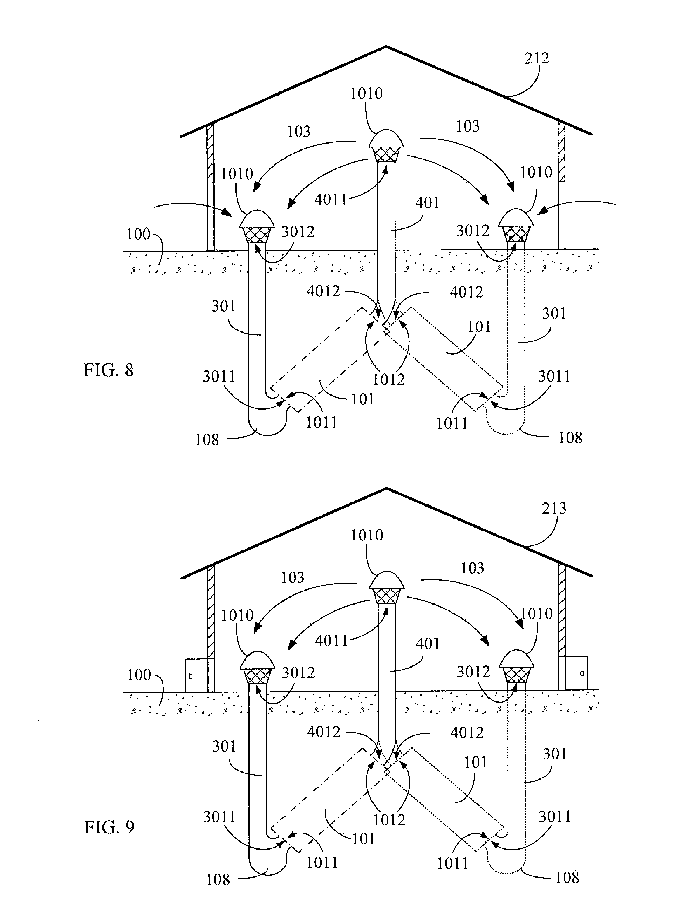

FIG. 8 is a lateral structural view showing the embodiment shown in FIG 7 being provided with a semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.
FIG 9 is a lateral structural view showing the embodiment shown in FIG 7 being provided with a space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

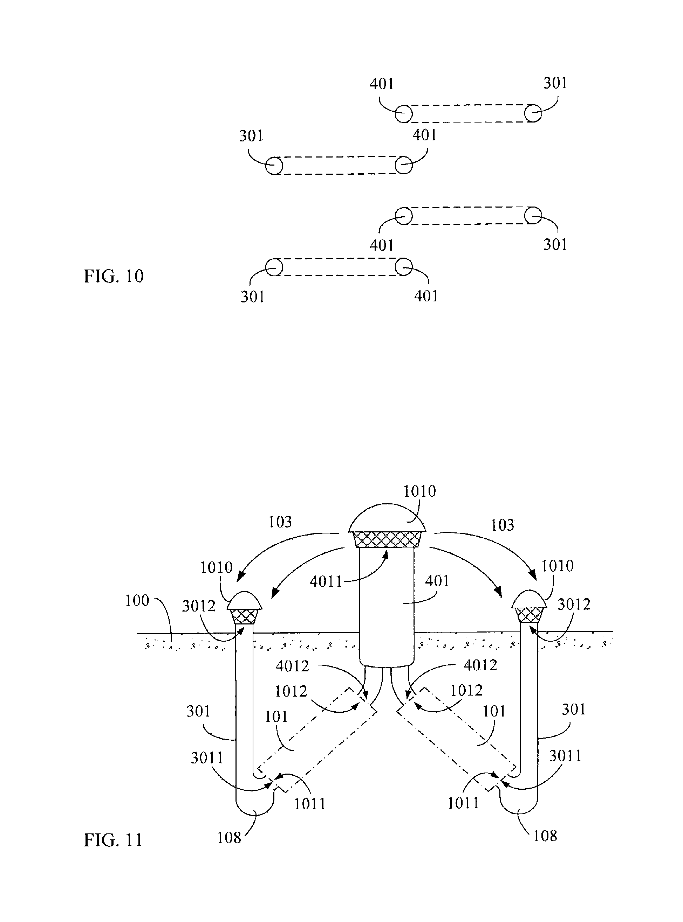

FIG 10 is a top view showing the cross section of FIG 7 to FIG. 9 taken along the horizon, according to the present invention.
FIG. 11 is a lateral structural view showing two or more than two of the pipeline structures (301) having the radially-expanded root part, wherein the bottom of each root part being installed with an outward-expanding arc-shaped fluid chamber (108), the fluid inlet/outlet port (3011) of individual outward-expanding arc-shaped fluid chamber (108) being leaded to the fluid inlet/outlet port (1011) of the upward-inclined heat gaining device (101), and the fluid inlet/outlet port (1012) of the heat gaining device (101) being connected to the fluid inlet/outlet port (4012) of the shared pipeline structure (401), according to the present invention.

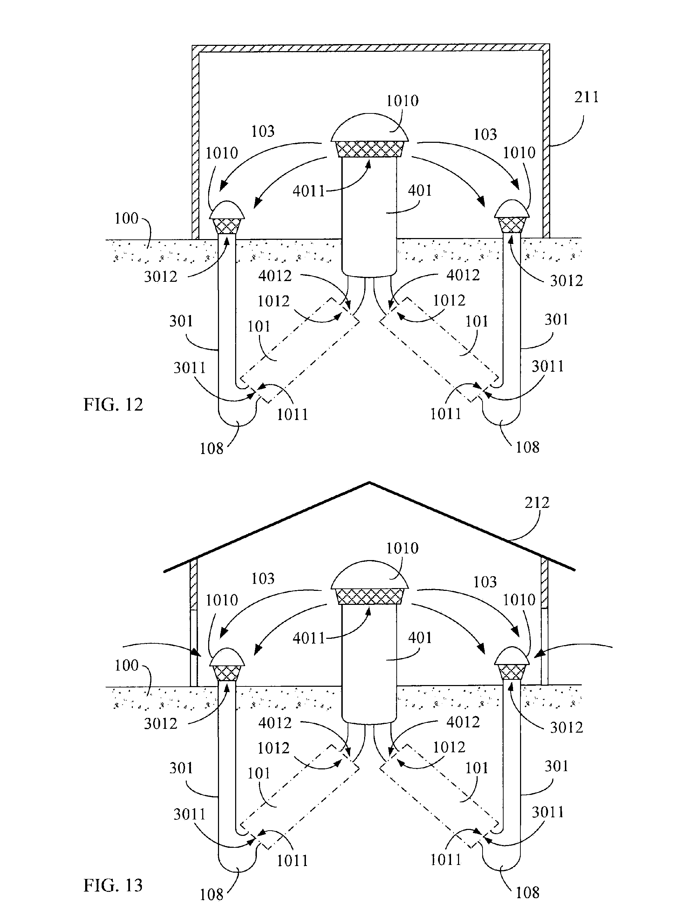

FIG. 12 is a lateral structural view showing the embodiment shown in FIG. 11 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.
FIG 13 is a lateral structural view showing the embodiment shown in FIG 11 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

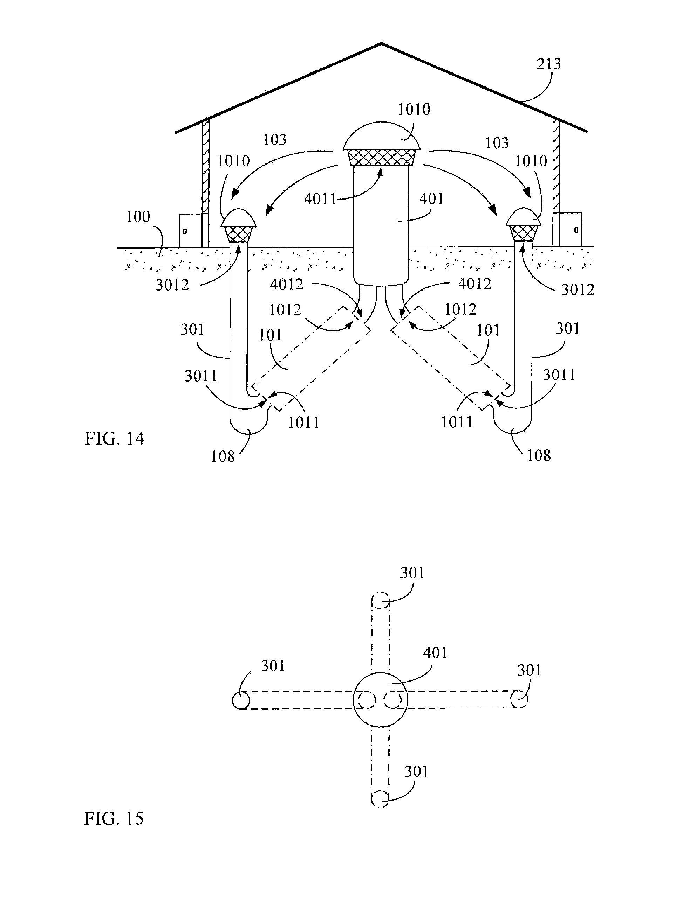

FIG 14 is a lateral structural view showing the embodiment shown in FIG 11 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.
FIG. 15 is a top view showing the cross section of FIG 11 to FIG. 14 taken along the horizon, according to the present invention.

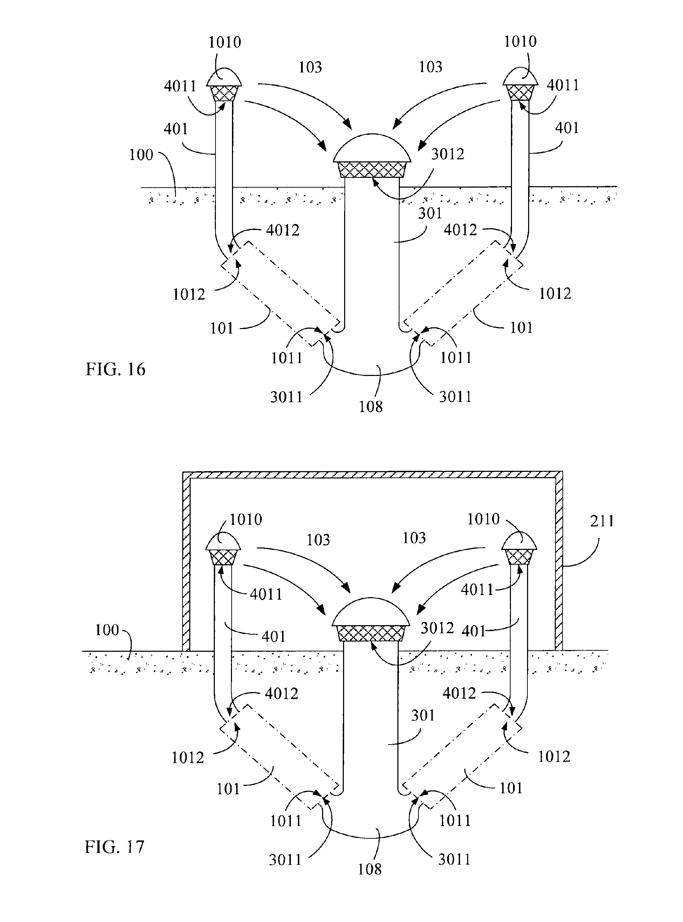

FIG. 16 is a lateral structural view showing the present invention being provided with a shared pipeline structure (301), wherein the bottom of the root part is installed with an outward-expanding arc-shaped fluid chamber (108), the individual fluid inlet/outlet port (3011) of the outward-expanding arc-shaped fluid chamber (108) being leaded to the fluid inlet/outlet port (1011) of the upward-inclined heat gaining device (101), and the fluid inlet/outlet port (1012) of the heat gaining device (101) being connected to the fluid inlet/outlet port (4012) of two or more than two of the pipeline structures (401) having the radially-expanded root part.
FIG 17 is a lateral structural view showing the embodiment shown in FIG 16 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301).

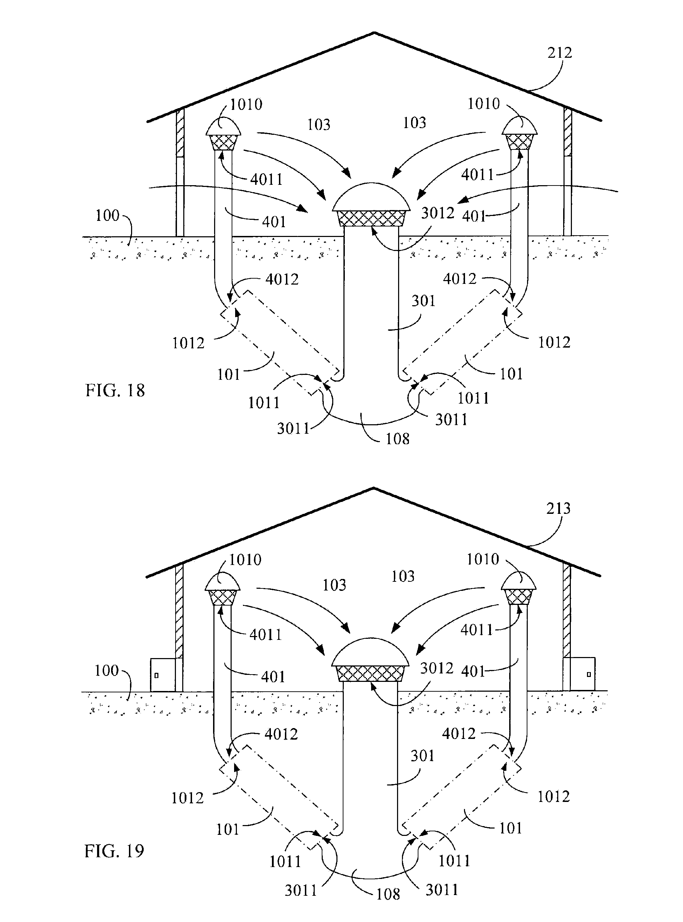

FIG 18 is a lateral structural view showing the embodiment shown in FIG. 16 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).
FIG. 19 is a lateral structural view showing the embodiment shown in FIG. 16 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (3 01).

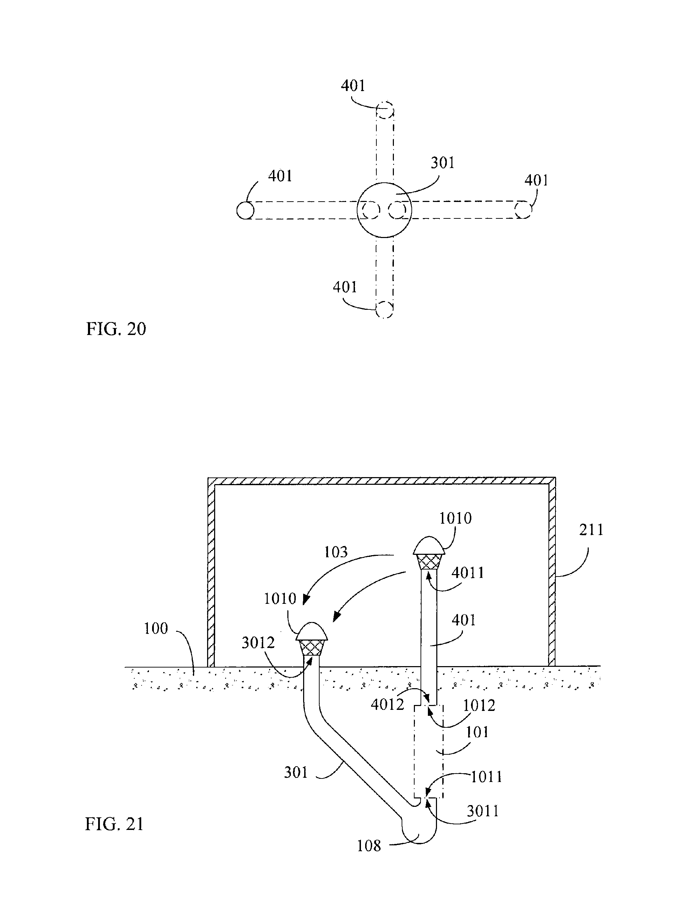

FIG 20 is a top view showing the cross section of FIG. 16 to FIG 19 taken along the horizon, according to the present invention.
FIG. 21 is a lateral structural view showing the present invention being provided with a linear pipeline structure (301), wherein the bottom thereof being installed with the outward-expanding arc-shaped fluid chamber (108) for being connected to the vertical heat gaining device (101) disposed in the natural thermal energy storage body (100), then the fluid inlet/outlet port (1012) of the heat gaining device (101) being connected to the fluid inlet/outlet port (4012) of the pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301).

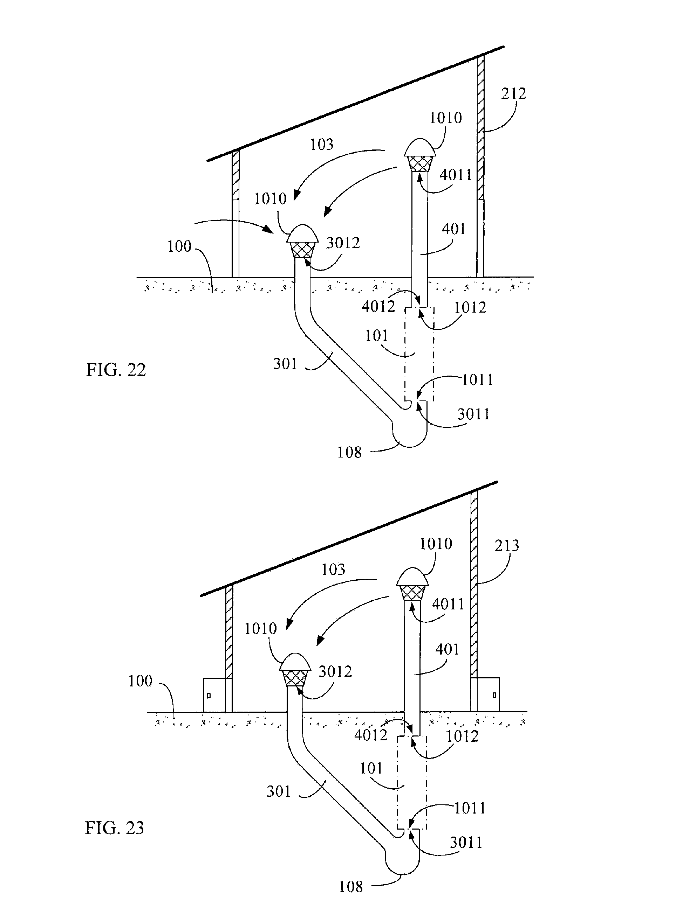

FIG. 22 is a lateral structural view showing the embodiment shown in FIG 21 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).
FIG. 23 is a lateral structural view showing the embodiment shown in FIG. 21 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).

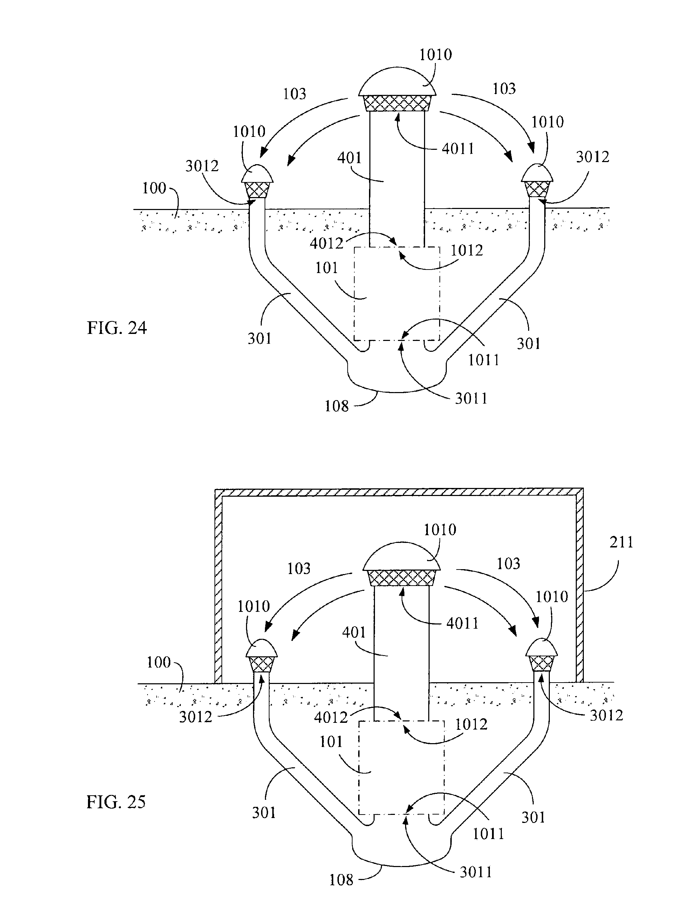

FIG. 24 is a lateral structural view showing the present invention being provided with two or more than two of the pipeline structures (301) having the radially-expanded root part, the bottom of each root part being leaded to the outward-expanding arc-shaped fluid chamber (108), then the fluid inlet/outlet port (3011) of the outward-expanding arc-shaped fluid chamber (108) being leaded to the fluid inlet/outlet port (1011) of the shared vertical heat gaining device (101), then the fluid inlet/outlet port (1012) of the shared heat gaining device (101) being connected to the fluid inlet/outlet port (4012) of the shared pipeline structure (401).
FIG. 25 is a lateral structural view showing the embodiment shown in FIG. 24 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301).

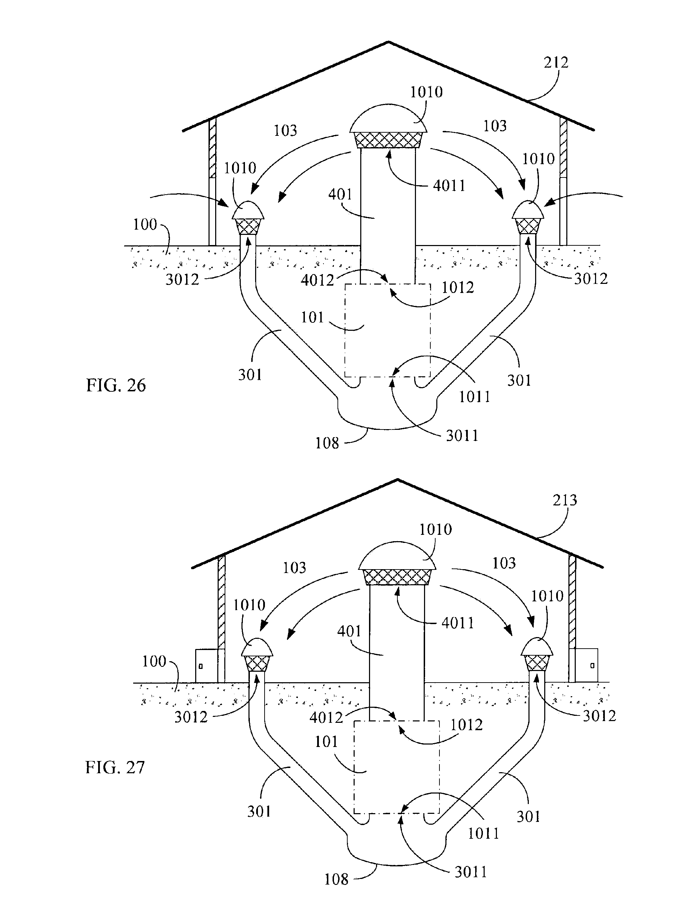

FIG. 26 is a lateral structural view showing the embodiment shown in FIG. 24 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).
FIG. 27 is a lateral structural view showing the embodiment shown in FIG. 24 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).

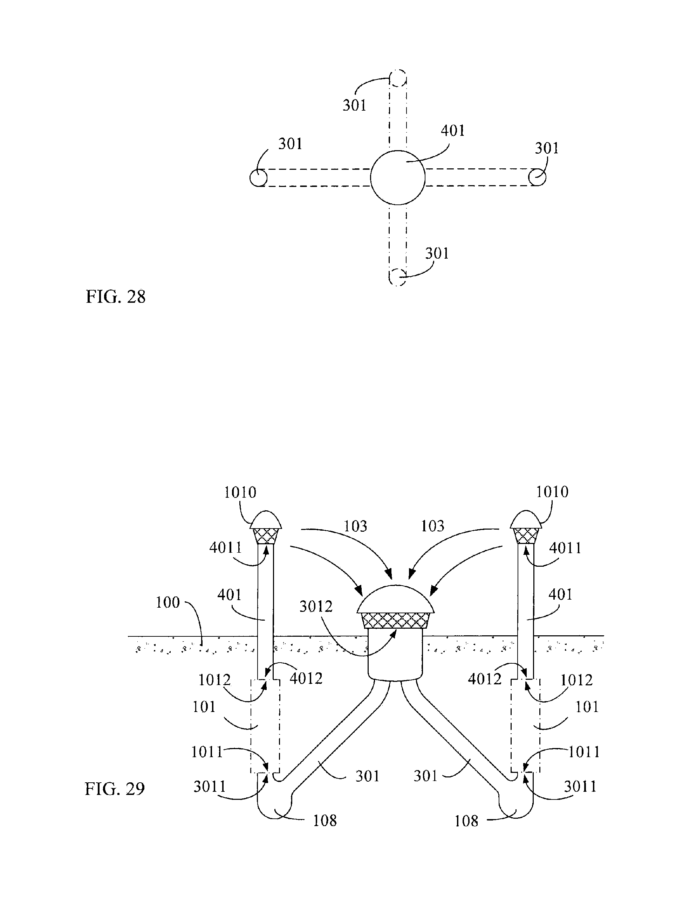

FIG 28 is a top view showing the cross section of FIG. 24 to FIG 27 taken along the horizon, according to the present invention.
FIG 29 is a lateral structural view showing the present invention being provided with a shared pipeline structures (301) having two or more than two radially-expanded shunt manifolds at the bottom for being individually leaded to the connected outward-expanding arc-shaped fluid chamber (108), the fluid inlet/outlet port (3011) of the outward-expanding arc-shaped fluid chamber (108) being leaded to the fluid inlet/outlet port (1011) of the vertical heat gaining device (101), then the fluid inlet/outlet port (1012) of the heat gaining device (101) being connected to the fluid inlet/outlet port (4012) of the pipeline structure (401).

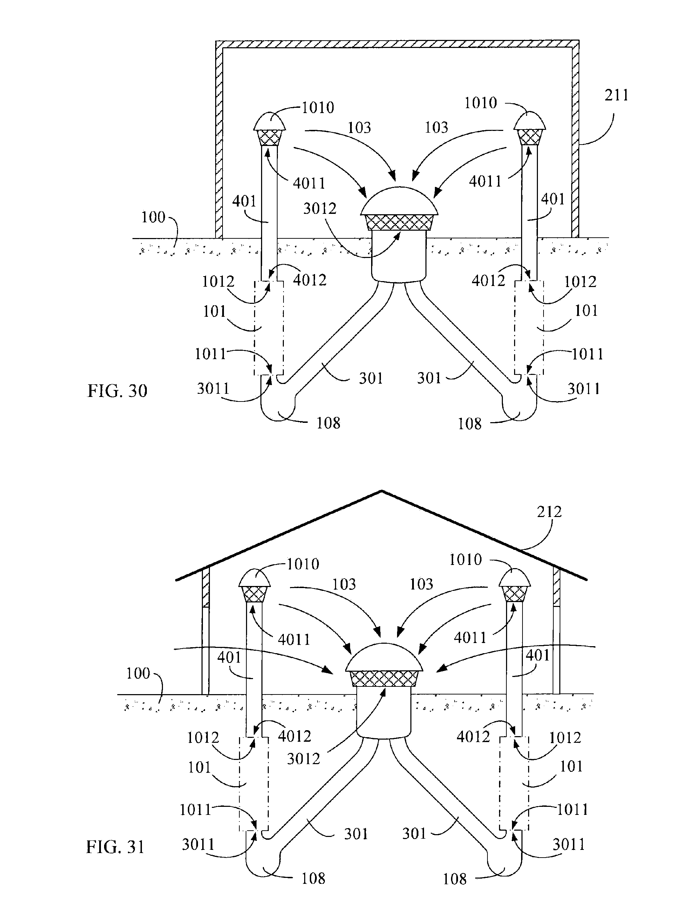

FIG. 30 is a lateral structural view showing the embodiment shown in FIG 29 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301).
FIG. 31 is a lateral structural view showing the embodiment shown in FIG 29 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).

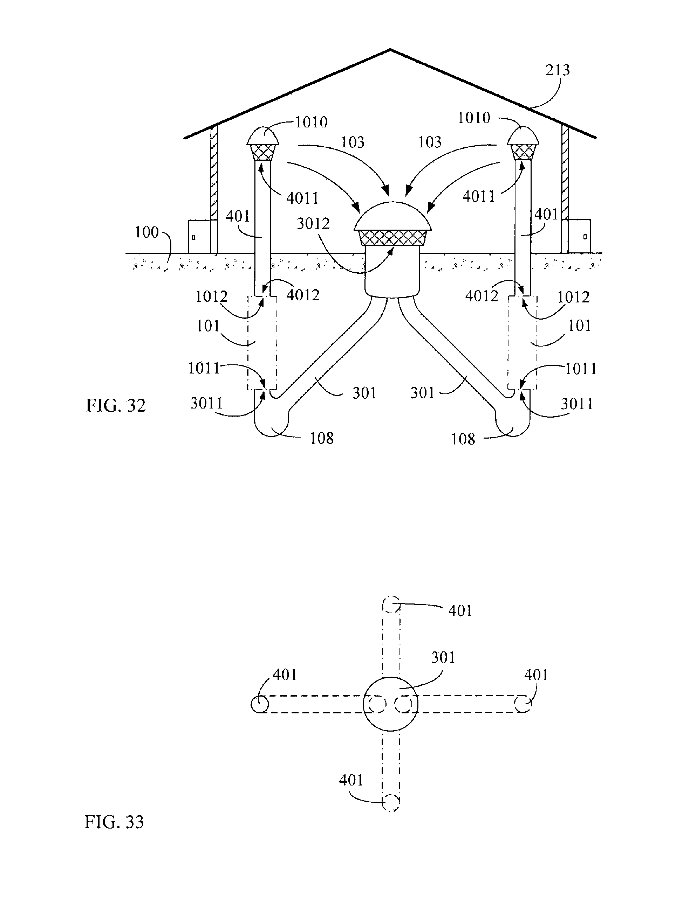

FIG 32 is a lateral structural view showing the embodiment shown in FIG 29 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).
FIG. 33 is a top view showing the cross section of FIG 29 to FIG 32 taken along the horizon, according to the present invention.

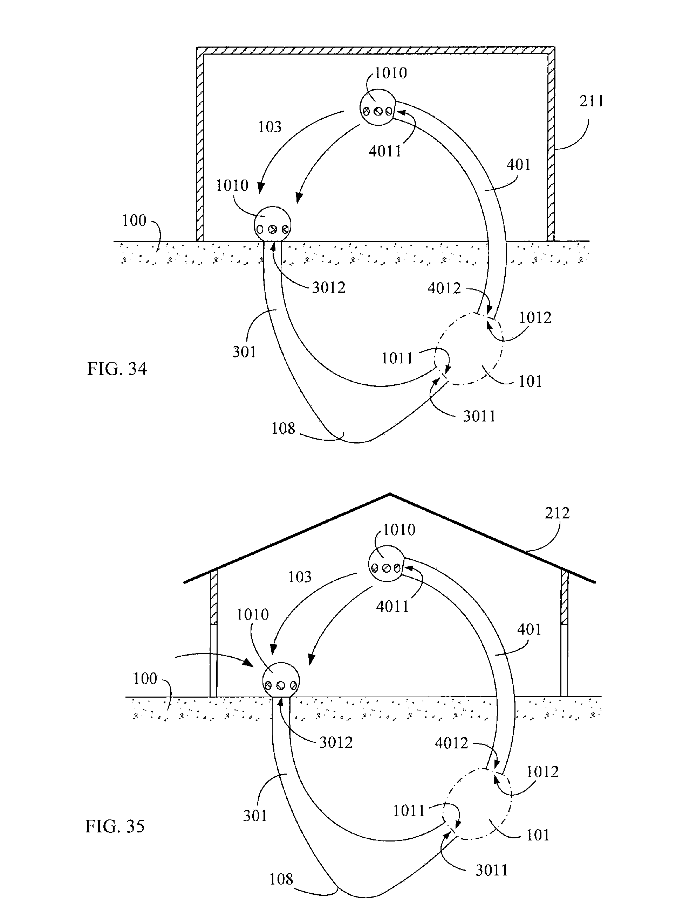

FIG. 34 is a lateral structural view showing the present invention being provided with the arc-shaped pipeline structure (301), wherein the bottom thereof being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.
FIG. 35 is a lateral structural view showing the embodiment shown in FIG 34 being provided with a semi-close type space limiting and flow direction guiding structure (212) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.

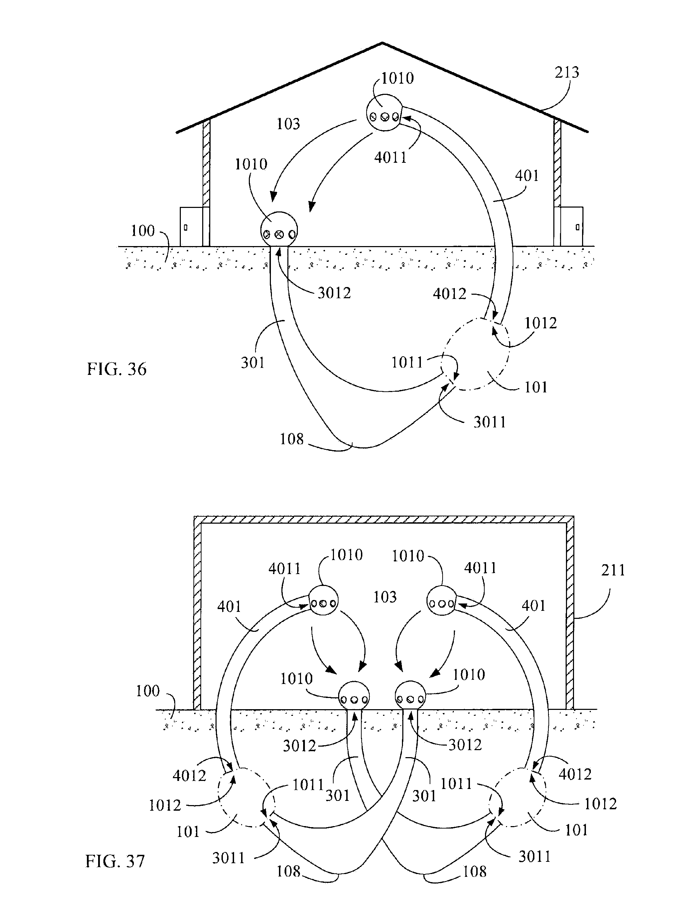

FIG 36 is a lateral structural view showing the embodiment shown in FIG. 34 being provided with a space limiting and flow direction guiding structure capable of controlling the door opening or closing (213) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.
FIG. 37 is a lateral structural view showing the present invention being provided with the arc-shaped pipeline structure (301), and the pipeline structures (301) of at least two open-loop natural thermal energy releasing systems with partial reflux being staggeringly disposed in the natural thermal energy storage body (100), wherein the bottom of each open-loop natural thermal energy releasing system with partial reflux being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.

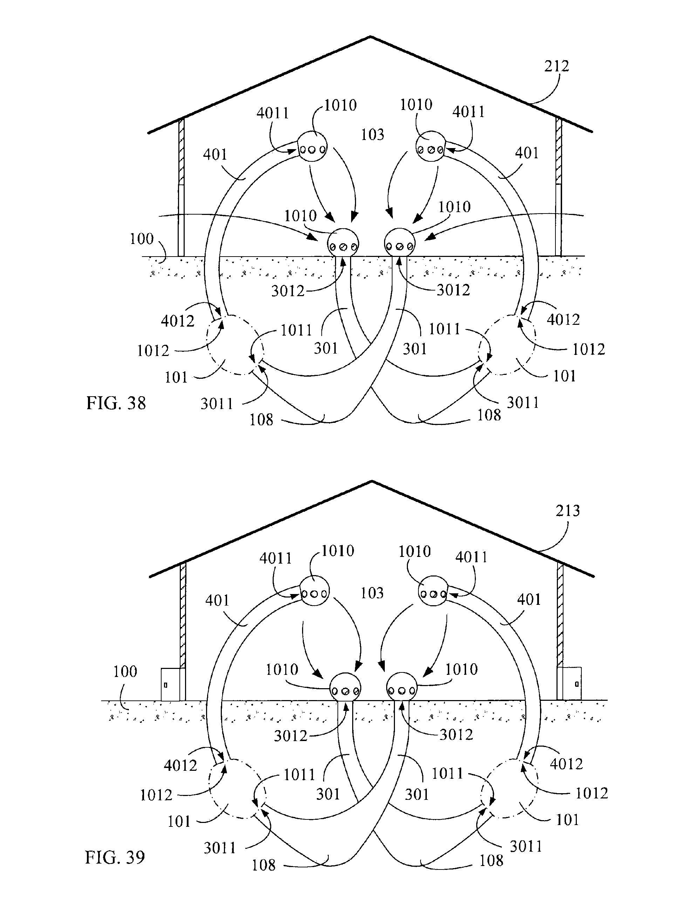

FIG. 38 is a lateral structural view showing the embodiment shown in FIG 37 being provided with a semi-close type space limiting and flow direction guiding structure (212) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.

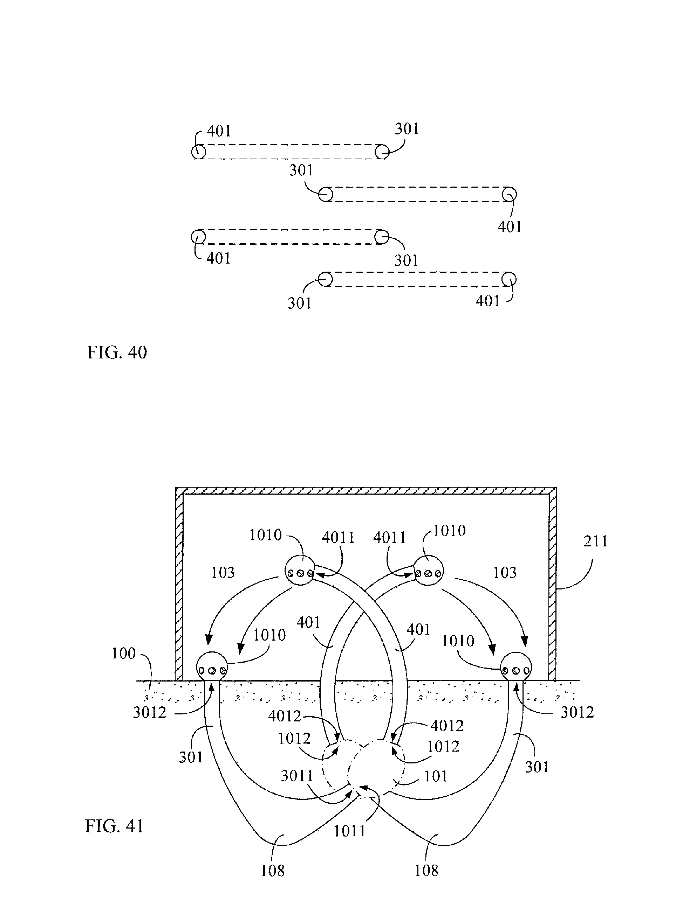

FIG 39 is a lateral structural view showing the embodiment shown in FIG. 37 being provided with a space limiting and flow direction guiding structure capable of controlling the door opening or closing (213) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention. FIG 40 is a top view showing the cross section of FIG. 37 to FIG 39 taken along the horizon, according to the present invention.
FIG. 41 is a lateral structural view showing the present invention being provided with the arc-shaped pipeline structure (301), and the pipeline structures (401) of at least two open-loop natural thermal energy releasing systems with partial reflux being staggeringly disposed in the natural thermal energy storage body (100), wherein the bottom of each open-loop natural thermal energy releasing system with partial reflux being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.

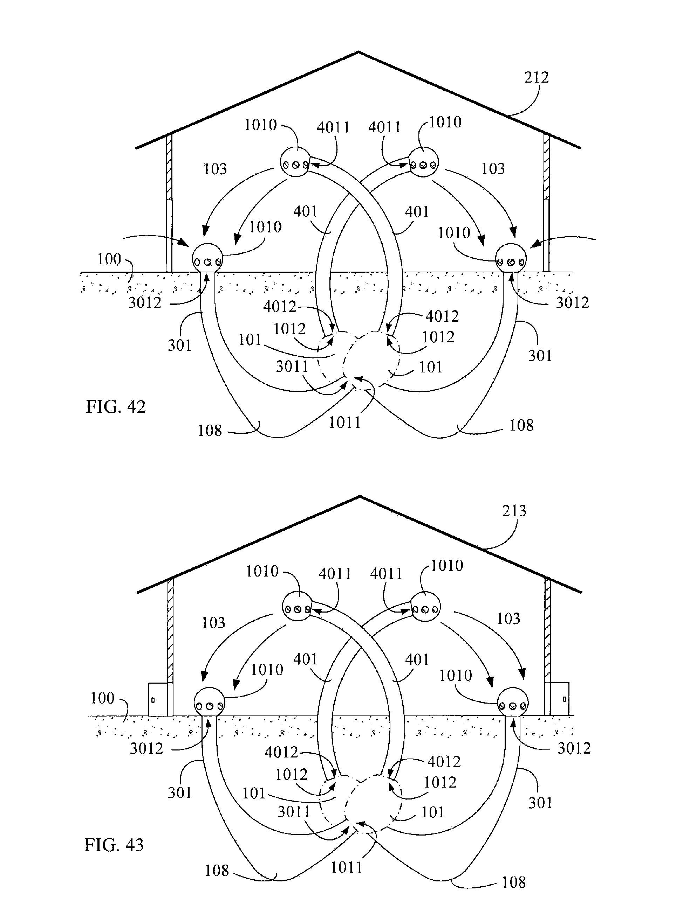

FIG 42 is a lateral structural view showing the embodiment shown in FIG. 41 being provided with a semi-close type space limiting and flow direction guiding structure (212) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.
FIG 43 is a lateral structural view showing the embodiment shown in FIG. 41 being provided with a space limiting and flow direction guiding structure capable of controlling the door opening or closing (213) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention.

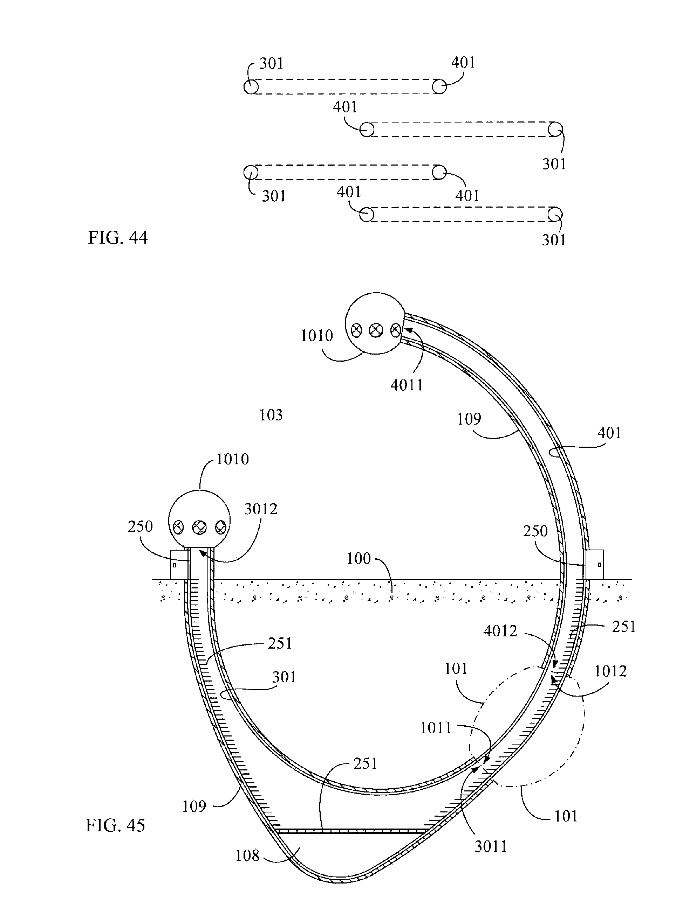

FIG 44 is a top view showing the cross section of FIG. 41 to FIG. 43 taken along the horizon, according to the present invention.
FIG 45 is a schematic view showing a maintenance entrance (250) and a maintenance stair passage (251) being further provided, according to one embodiment of the present invention.

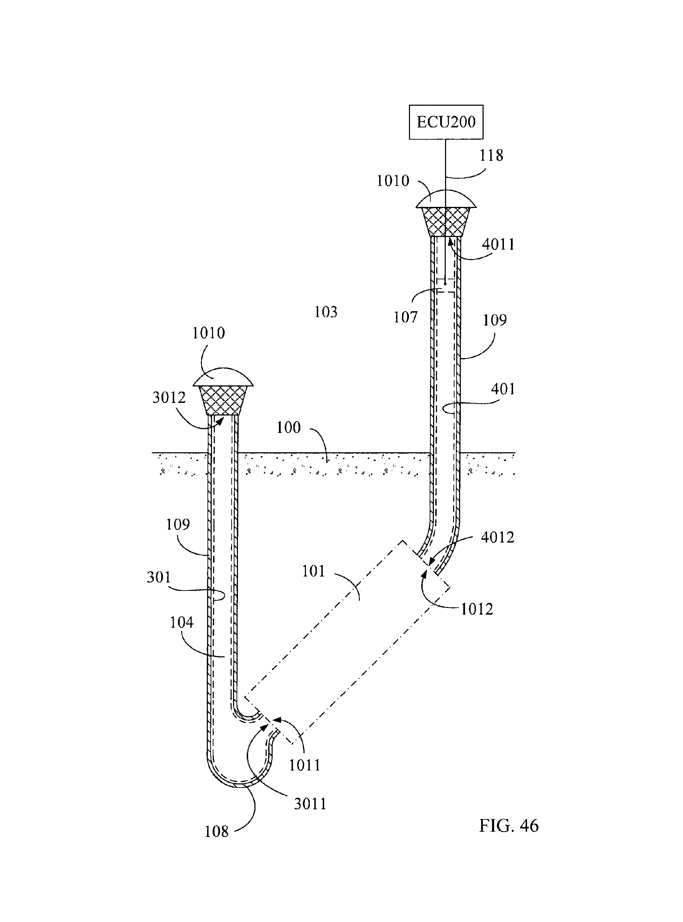

FIG. 46 is a lateral structural view showing the cross section in which an auxiliary fluid pump (107) being installed in the interior of the flowpath segment configured by the heat gaining device (101) and the pipeline structure (401), according to one embodiment of the present invention.

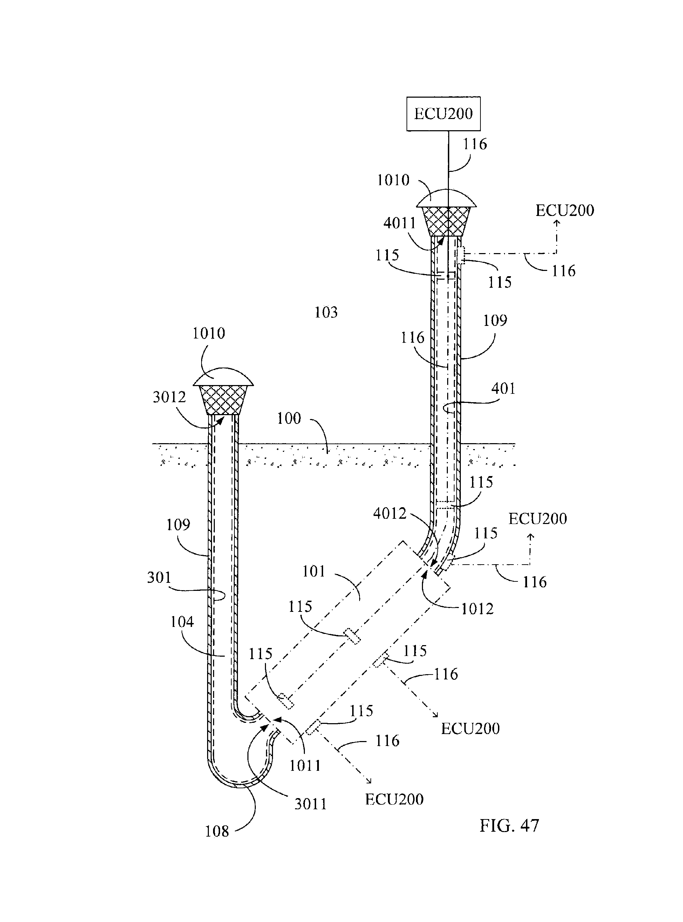

FIG 47 is a lateral structural view showing the cross section in which an auxiliary heating/cooling device (115) being installed in the interior or the exterior of the flowpath segment configured by the heat gaining device (101) and the pipeline structure (401), according to one embodiment of the preset invention.

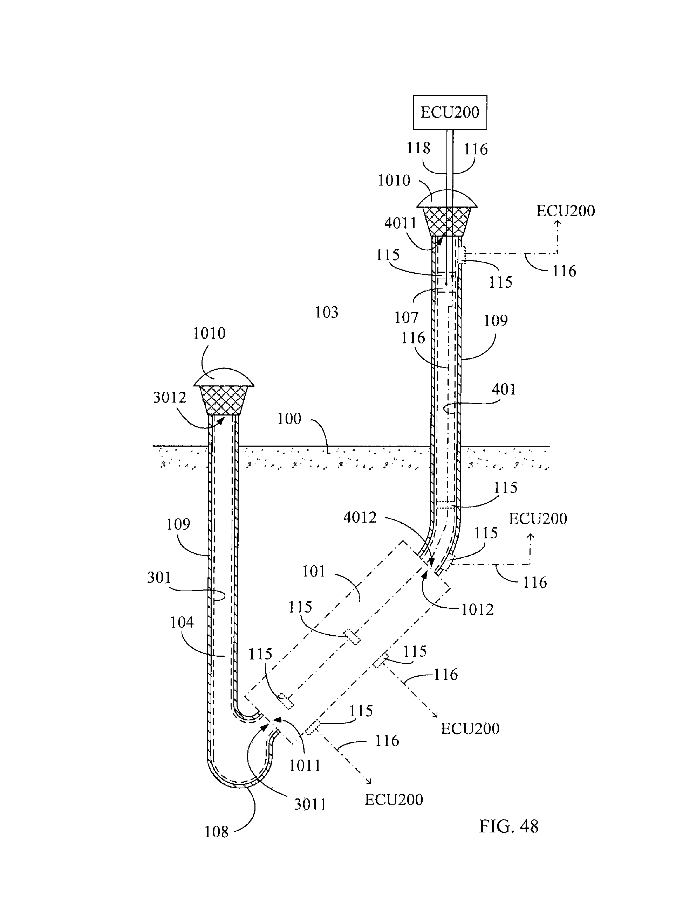

FIG. 48 is a lateral structural view showing the cross section in which the interior of the flowpath segment configured by the heat gaining device (101) and the pipeline structure (401) being installed with the auxiliary fluid pump (107), and the interior or the exterior being installed with the auxiliary heating/cooling device (115), according to one embodiment of the present invention.

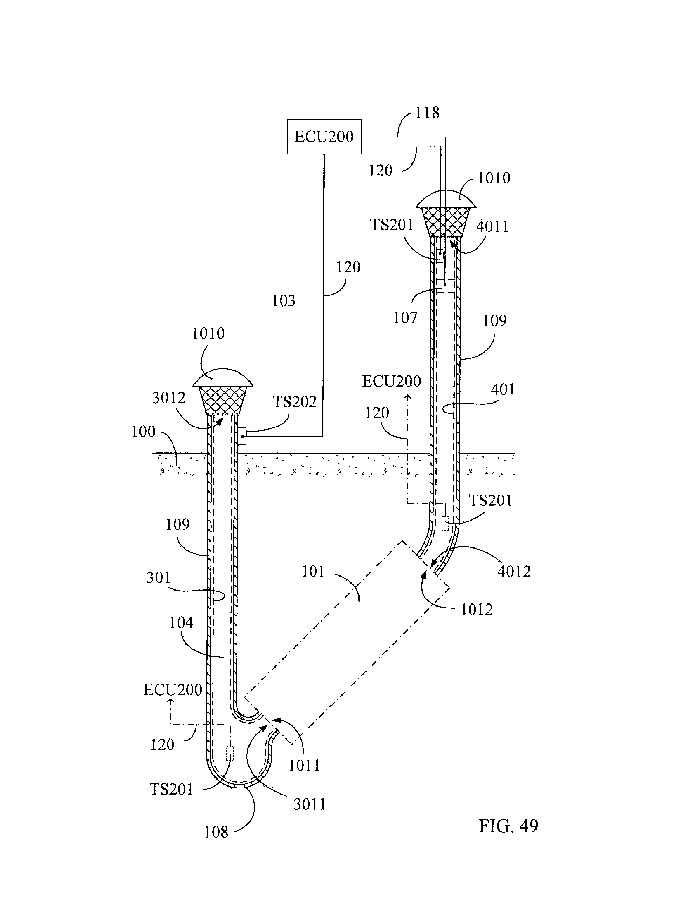

FIG. 49 is a schematic view showing the present invention being installed with the electric power control unit (ECU200), the heat exchange fluid temperature sensing device (TS201) and the environment temperature sensing device (TS202) for controlling the auxiliary fluid pump (107), according to one embodiment of the present invention.

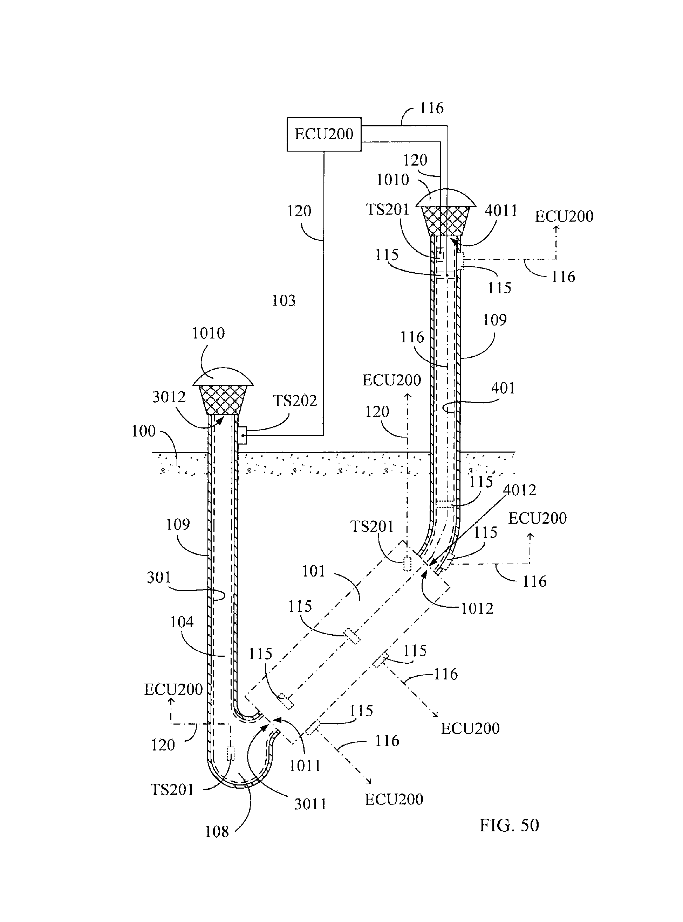

FIG 50 is a schematic view showing the present invention being installed with the electric power control unit (ECU200), the heat exchange fluid temperature sensing device (TS201) and the environment temperature sensing device (TS202) for controlling the auxiliary heating/cooling device (115), according to one embodiment of the present invention.

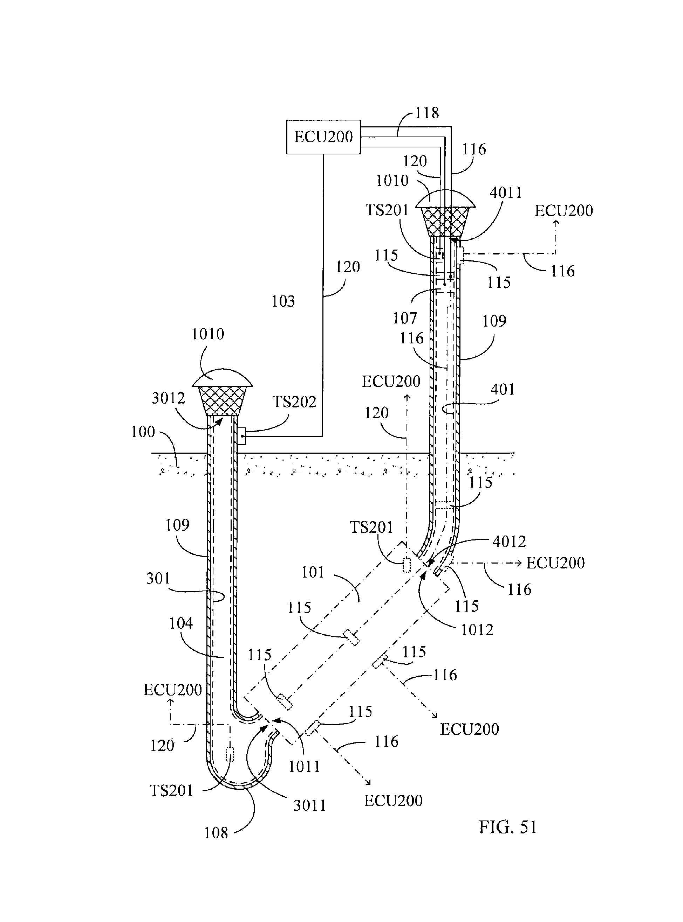

FIG. 51 is a schematic view showing the present invention being installed with the electric power control unit (ECU200), the heat exchange fluid temperature sensing device (TS201) and the environment temperature sensing device (TS202) for controlling the auxiliary fluid pump (107) and the auxiliary heating/cooling device (115), according to one embodiment of the present invention.

### DESCRIPTION OF MAIN COMPONENT SYMBOLS

- 100 :: Natural thermal energy storage body
- 101 :: Heat gaining device
- 103 :: Temperature differentiation body
- 104 :: Heat exchange fluid
- 107 :: Auxiliary fluid pump
- 108 :: Outward-expanding arc-shaped fluid chamber
- 109 :: Heat insulation member
- 115 :: Auxiliary heating/cooling device
- 116 - 118 :: Power wire
- 120 :: Signal transmission wire
- 1010 :: Protection net and protection cover device for fluid inlet/outlet port
- 1011 - 1012 - 3011 - 3012 - 4011 - 4012 :: Fluid inlet/outlet port
- ECU200 :: Electric power control unit
- TS201 :: Heat exchange fluid temperature sensing device
- TS202 :: Environment temperature sensing device
- 201 :: Space limiting and flow direction guiding structure
- 211 :: Close-type space limiting and flow direction guiding structure
- 212 :: Semi-close type space limiting and flow direction guiding structure
- 213 :: Space limiting and flow direction guiding structure capable of controlling the door opening or closing (213)
- 250 :: Maintenance entrance
- 251 :: Maintenance stair passage
- 301 - 401 :: Pipeline structure

### DETAILED DESCRIPTION OF THE PREFERRED EMBODIMENTS

A conventional open-loop temperature equalization device utilizes the thermal energy of a natural thermal energy storage body to transmit thermal energy to an external temperature differentiation body through adopting a heat exchange fluid as a carrier, and an open state is often formed between the fluid inlet/outlet port (4011) of the pipeline structure (401) and the fluid inlet/outlet port (3012) of the pipeline structure (301), and the space limiting and flow direction guiding structure (201) of the heat exchange fluid (104) is not provided, thereby thermal energy from the heat gaining device (101) is dispersed.

The present invention is to utilize the thermal energy of a natural thermal energy storage body (100) to be transmitted to a heat exchange fluid (104) in a heat gaining device (101) installed at the bottom of the open-loop natural thermal energy releasing system with partial reflux, and with the cold descending/hot ascending effect provided by the heat exchange fluid (104) after being processed with temperature equalization or the pumping of an auxiliary fluid pump, the heat exchange fluid (104) in the heat gaining device (101) is enabled to release the thermal energy in the omni-direction or in a set direction from a fluid inlet/outlet port (4011) of a pipeline structure (401) to the interior of a space limiting and flow direction guiding structure (201) to be received with the heat releasing from the heat exchange fluid (104), and the main features includes one or more than one of the 1) to 7) structural devices including: 1) installing the space limiting and flow direction guiding structure (201) of the heat exchange fluid (104) between the fluid inlet/outlet port (4011) of the pipeline structure (401) and a fluid inlet/outlet port (3012) of a pipeline structure (301) for allowing the heat exchange fluid (104) with thermal energy to be released from the fluid inlet/outlet port (4011) of the pipeline structure (401), and a part thereof is returned to the fluid inlet/outlet port (3012) of the pipeline structure (301) for flowing back to the heat gaining device (101); 2) installing an outward-expanding arc-shaped fluid chamber (108) at one or more than one of turning locations of the open-loop flowpath configured by the heat gaining device (101), the pipeline structure (301), the space limiting and flow direction guiding structure (201) and the pipeline structure (401) for temporally storing a part of the heat exchange fluid (104) and moderating the flow speed of the heat exchange fluid (104) with thermal energy for reducing the flow damping of the flowpath to the heat exchange fluid (104); 3) installing an auxiliary heating/cooling device (115); 4) installing an auxiliary fluid pump (107); 5) installing a heat exchange fluid temperature sensing device (TS201); 6) installing an environment temperature sensing device (TS202); and 7) installing an electric power control unit (ECU200).

The structural features and functions of the present invention are illustrated through embodiments accompanied with drawings, as followings:
FIG. 1 is a schematic structural view showing an outward-expanding arc-shaped fluid chamber (108) being installed between the linear pipeline structure (301) and the heat gaining device (101) for being leaded to the upward-inclined heat gaining device (101) and the pipeline structure (401), according to one embodiment of the present invention;

As shown in FIG. 1, the heat gaining device (101) is installed in a natural thermal energy storage body (100) which is constituted by a solid or liquid thermal energy storage body having greater and stable thermal energy storage capacity such as a stratum, ground, lake, pool, river, desert, berg and ocean;

The fluid inlet/outlet port (1011) of the heat gaining device (101) is leaded to the fluid inlet/outlet port (3012) and a protection net and protection cover device for fluid inlet/outlet port (1010) through the pipeline structure (301), another fluid inlet/outlet port (1012) of the heat gaining device (101) is leaded to the temperature differentiation body (103) through the fluid inlet/outlet port (4011) of the pipeline structure (401) and the protection net and protection cover device for fluid inlet/outlet port (1010), such that the heat exchange fluid (104) passing the heat gaining device (101) is enabled to configure an open-loop flowpath with partial reflux through the pipeline structures (301), (401) and the temperature differentiation body (103) for releasing the thermal energy to the temperature differentiation body (103); the heat exchange fluid (104) is made of a gaseous or liquid fluid having heat storage and conduction properties; the temperature differentiation body (103) is a space or structure having certain functions and configured by gas or solid or liquid, for receiving the thermal energy released by the heat exchange fluid during the system operation;

Features of main components are as followings:
--Heat gaining device (101): which is made of a material having good heat conductivity, and provided with a flowpath structure jointly configured by one or more than one flowpaths; or structured by a conduit structure jointly configured by one or more than one flowpaths, wherein the flowpath cross section defined as A-A is a pipe-like structure having the cross section formed in round shape or other geometric shapes, the interior or exterior thereof can be installed with thermal conductive fin sheets having no negative influence to the flowing fluid and installed in the natural thermal energy storage body (100) with an upward inclined means; two ends of the flowpath of the heat gaining device (101) respectively have a fluid inlet/outlet port (1011), (1012) for being respectively connected to one end of the pipeline structure (301) and one end of the pipeline structure (401) so as to be leaded to the temperature differentiation body (103) for forming the open-loop flowpath with partial reflux, the flowpath inside the heat gaining device (101) is upward inclined with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to cooperate with the heat exchange fluid (104) to generate a hot ascending/cold descending effect;
--Pipeline structure (301): which is constituted by a fluid pipeline structure having one or more than one flowpaths in round shape or other geometric shapes, the cross section of pipeline structure is defined as a C-C cross section having round or other geometric shapes, the pipeline structure (301) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (301) is formed with one or more than one fluid inlet/outlet ports (3011) for being communicated with the fluid inlet/outlet port (1011) of the heat gaining device (101) having one or more than one flowpaths; the other end of the pipeline structure (301) is formed with one or more than one fluid inlet/outlet ports (3012) which are jointly configured for being leaded to the protection net and protection cover device for fluid inlet/outlet port (1010) for transporting the heat exchange fluid (104);
--Pipeline structure (401): which is constituted by a fluid pipeline structure having one or more than one flowpaths in round shape or other geometric shapes, the cross section of pipeline structure is defined as a D-D cross section having round or other geometric shapes, the pipeline structure (401) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (401) is formed with one or more than one fluid inlet/outlet ports (4012) for being communicated with the fluid inlet/outlet port (1012) of the heat gaining device (101) having one or more than one flowpaths; the other end of the pipeline structure (401) is formed with one or more than one fluid inlet/outlet ports (4011) for being leaded to the protection net and protection cover device for fluid inlet/outlet port (1010) for transporting the heat exchange fluid (104);
-- Outward-expanding arc-shaped fluid chamber (108): which is constituted by an outward-expanding arc-shaped flowpath structure formed at one or more than one of the turning locations of the open-loop type flowpath configured by the heat gaining device (101), the pipeline structure (301), the temperature differentiation body (103) and the pipeline structure (401), for temporally storing a part of the heat exchange fluid (104) and moderating the flow speed of the heat exchange fluid (104) with thermal energy thereby reducing the flow damping of the open-loop type flowpath to the heat exchange fluid (104);
   The volume of the fluid stored in the outward-expanding arc-shaped fluid chamber (108) installed close to the fluid inlet/outlet port of the heat gaining device (101) is relatively larger, therefore the total heat capacity is larger, when the heat gaining device (101) introduces thermal energy from the temperature differentiation body which is disposed at the exterior and in contact with said device, the thermal energy is transmitted towards two sides through the fluid, the fluid at the side where the outward-expanding arc-shaped fluid chamber (108) being installed on the heat gaining device (101) generates a smaller temperature difference, the other side where the outward-expanding arc-shaped fluid chamber (108) not being installed generates a greater temperature difference, thereby forming temperature differentiation at two sides of the inlet/outlet ports of the heat gaining device (101);
   The mentioned open-loop natural thermal energy releasing system with partial reflux includes at least a heat gaining device (101), at least a pipeline structure (301) and at least a pipeline structure (401); wherein the heat gaining device (101), the pipeline structure (301) and the pipeline structure (401) can be integrally formed or assembled by plural components, and the dimension and shape at each connection location for the assembly is in a gradually-altered shape for forming a smooth state, said smooth state can reduce the damping while the fluid is flowing, thereby facilitating the flow circulation of the fluid;
   FIG 2 is a schematic structural view showing the outward-expanding arc-shaped fluid chamber (108) being installed between the linear pipeline structure (301) and the heat gaining device (101) for being leaded to the vertical heat gaining device (101) and the pipeline structure (401), according to one embodiment of the present invention;

As shown in FIG. 2, the heat gaining device (101) is installed in a natural thermal energy storage body (100) which is constituted by a solid or liquid thermal energy storage body having greater and stable thermal energy storage capacity such as a stratum, ground, lake, pool, river, desert, berg and ocean;

The fluid inlet/outlet port (1011) of the heat gaining device (101) is leaded to the fluid inlet/outlet port (3012) and a protection net and protection cover device for fluid inlet/outlet port (1010) through the pipeline structure (301), another fluid inlet/outlet port (1012) of the heat gaining device (101) is leaded to the temperature differentiation body (103) through the fluid inlet/outlet port (4011) of the pipeline structure (401) and the protection net and protection cover device for fluid inlet/outlet port (1010), such that the heat exchange fluid (104) passing the heat gaining device (101) is enabled to configure an open-loop flowpath with partial reflux through the pipeline structures (301), (401) and the temperature differentiation body (103) for releasing the thermal energy to the temperature differentiation body (103); the heat exchange fluid (104) is made of a gaseous or liquid fluid having heat storage and conduction properties; the temperature differentiation body (103) is a space or structure having certain functions and configured by gas or solid or liquid, for receiving the thermal energy released by the heat exchange fluid during the system operation;

Features of main components are as followings:
--Heat gaining device (101): which is made of a material having good heat conductivity, and provided with a flowpath structure jointly configured by one or more than one flowpaths; or structured by a conduit structure jointly configured by one or more than one flowpaths, wherein the flowpath cross section defined as A-A is a pipe-like structure having the cross section formed in round shape or other geometric shapes, the interior or exterior thereof can be installed with thermal conductive fin sheets having no negative influence to the flowing fluid and installed in the natural thermal energy storage body (100) with a vertical means; two ends of the flowpath of the heat gaining device (101) respectively have a fluid inlet/outlet port (1011), (1012) for being respectively connected to one end of the pipeline structure (301) and one end of the pipeline structure (401) so as to be leaded to the temperature differentiation body (103) for forming the open-loop flowpath with partial reflux, the flowpath inside the heat gaining device (101) is vertical with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to cooperate with the heat exchange fluid (104) to generate a hot ascending/cold descending effect;
--Pipeline structure (301): which is constituted by a fluid pipeline structure having one or more than one flowpaths in round shape or other geometric shapes, the cross section of pipeline structure is defined as a C-C cross section having round or other geometric shapes, the pipeline structure (301) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (301) is formed with one or more than one fluid inlet/outlet ports (3011) for being communicated with the fluid inlet/outlet port (1011) of the heat gaining device (101) having one or more than one flowpaths; the other end of the pipeline structure (301) is formed with one or more than one fluid inlet/outlet ports (3012) which are jointly configured for being leaded to the protection net and protection cover device for fluid inlet/outlet port (1010) for transporting the heat exchange fluid (104);
--Pipeline structure (401): which is constituted by a fluid pipeline structure having one or more than one flowpaths in round shape or other geometric shapes, the cross section of pipeline structure is defined as a D-D cross section having round or other geometric shapes, the pipeline structure (401) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (401) is formed with one or more than one fluid inlet/outlet ports (4012) for being communicated with the fluid inlet/outlet port (1012) of the heat gaining device (101) having one or more than one flowpaths; the other end of the pipeline structure (401) is formed with one or more than one fluid inlet/outlet ports (4011) for being leaded to the protection net and protection cover device for fluid inlet/outlet port (1010) for transporting the heat exchange fluid (104);
-- Outward-expanding arc-shaped fluid chamber (108): which is constituted by an outward-expanding arc-shaped flowpath structure formed at one or more than one of the turning locations of the open-loop type flowpath configured by the heat gaining device (101), the pipeline structure (301), the temperature differentiation body (103) and the pipeline structure (401), for temporally storing a part of the heat exchange fluid (104) and moderating the flow speed of the heat exchange fluid (104) with thermal energy thereby reducing the flow damping of the open-loop type flowpath to the heat exchange fluid (104);
   The volume of the fluid stored in the outward-expanding arc-shaped fluid chamber (108) installed close to the fluid inlet/outlet port of the heat gaining device (101) is relatively larger, therefore the total heat capacity is larger, when the heat gaining device (101) introduces thermal energy from the temperature differentiation body which is disposed at the exterior and in contact with said device, the thermal energy is transmitted towards two sides through the fluid, the fluid at the side where the outward-expanding arc-shaped fluid chamber (108) being installed on the heat gaining device (101) generates a smaller temperature difference, the other side where the outward-expanding arc-shaped fluid chamber (108) not being installed generates a greater temperature difference, thereby forming temperature differentiation at two sides of the inlet/outlet ports of the heat gaining device (101);
   The mentioned open-loop natural thermal energy releasing system with partial reflux includes at least a heat gaining device (101), at least a pipeline structure (301) and at least a pipeline structure (401); wherein the heat gaining device (101), the pipeline structure (301) and the pipeline structure (401) can be integrally formed or assembled by plural components, and the dimension and shape at each connection location for the assembly is in a gradually-altered shape for forming a smooth state, said smooth state can reduce the damping while the fluid is flowing, thereby facilitating the flow circulation of the fluid;
   FIG. 3 is a schematic structural view showing the outward-expanding arc-shaped fluid chamber (108) being installed between the arc-shaped pipeline structure (301) and the heat gaining device (101) for being leaded to the upward-inclined heat gaining device (101) and the arc-shaped pipeline structure (401), according to one embodiment of the present invention;
   As shown in FIG. 3, the heat gaining device (101) is installed in a natural thermal energy storage body (100) which is constituted by a solid or liquid thermal energy storage body having greater and stable thermal energy storage capacity such as a stratum, ground, lake, pool, river, desert, berg and ocean;
   The fluid inlet/outlet port (1011) of the heat gaining device (101) is leaded to the fluid inlet/outlet port (3012) and a protection net and protection cover device for fluid inlet/outlet port (1010) through the pipeline structure (301), another fluid inlet/outlet port (1012) of the heat gaining device (101) is leaded to the temperature differentiation body (103) through the fluid inlet/outlet port (4011) of the pipeline structure (401) and the protection net and protection cover device for fluid inlet/outlet port (1010), such that the heat exchange fluid (104) passing the heat gaining device (101) is enabled to configure a open-loop flowpath with partial reflux through the pipeline structures (301), (401) and the temperature differentiation body (103) for releasing the thermal energy to the temperature differentiation body (103); the heat exchange fluid (104) is made of a gaseous or liquid fluid having heat storage and conduction properties; the temperature differentiation body (103) is a space or structure having certain functions and configured by gas or solid or liquid, for receiving the thermal energy released by the heat exchange fluid during the system operation;
   Features of main components are as followings:
--Heat gaining device (101): which is made of a material having good heat conductivity, and provided with a flowpath structure jointly configured by one or more than one flowpaths; or structured by a conduit structure jointly configured by one or more than one flowpaths, wherein the flowpath cross section defined as A-A is a pipe-like structure having the cross section formed in round shape or other geometric shapes, the interior or exterior thereof can be installed with thermal conductive fin sheets having no negative influence to the flowing fluid and installed in the natural thermal energy storage body (100) with an upward inclined means; two ends of the flowpath of the heat gaining device (101) respectively have a fluid inlet/outlet port (1011), (1012) for being respectively connected to one end of the pipeline structure (301) and one end of the pipeline structure (401) so as to be leaded to the temperature differentiation body (103) for forming the open-loop flowpath with partial reflux, the flowpath inside the heat gaining device (101) is upward-inclined with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to cooperate with the heat exchange fluid (104) to generate a hot ascending/cold descending effect;
--Pipeline structure (301): which is constituted by a fluid pipeline structure having one or more than one flowpaths in round shape or other geometric shapes, the cross section of pipeline structure is defined as a C-C cross section having round or other geometric shapes, the pipeline structure (301) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (301) is formed with one or more than one fluid inlet/outlet ports (3011) for being communicated with the fluid inlet/outlet port (1011) of the heat gaining device (101) having one or more than one flowpaths; the other end of the pipeline structure (301) is formed with one or more than one fluid inlet/outlet ports (3012) which are jointly configured for being leaded to the protection net and protection cover device for fluid inlet/outlet port (1010) for transporting the heat exchange fluid (104);
--Pipeline structure (401): which is constituted by a fluid pipeline structure having one or more than one flowpaths in round shape or other geometric shapes, the cross section of pipeline structure is defined as a D-D cross section having round or other geometric shapes, the pipeline structure (401) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (401) is formed with one or more than one fluid inlet/outlet ports (4012) for being communicated with the fluid inlet/outlet port (1012) of the heat gaining device (101) having one or more than one flowpaths; the other end of the pipeline structure (401) is formed with one or more than one fluid inlet/outlet ports (4011) for being leaded to the protection net and protection cover device for fluid inlet/outlet port (1010) for transporting the heat exchange fluid (104);
-- Outward-expanding arc-shaped fluid chamber (108): which is constituted by an outward-expanding arc-shaped flowpath structure formed at one or more than one of the turning locations of the open-loop type flowpath configured by the heat gaining device (101), the pipeline structure (301), the temperature differentiation body (103) and the pipeline structure (401), for temporally storing a part of the heat exchange fluid (104) and moderating the flow speed of the heat exchange fluid (104) with thermal energy thereby reducing the flow damping of the open-loop type flowpath to the heat exchange fluid (104);

The volume of the fluid stored in the outward-expanding arc-shaped fluid chamber (108) installed close to the fluid inlet/outlet port of the heat gaining device (101) is relatively larger, therefore the total heat capacity is larger, when the heat gaining device (101) introduces thermal energy from the temperature differentiation body which is disposed at the exterior and in contact with said device, the thermal energy is transmitted towards two sides through the fluid, the fluid at the side where the outward-expanding arc-shaped fluid chamber (108) being installed on the heat gaining device (101) generates a smaller temperature difference, the other side where the outward-expanding arc-shaped fluid chamber (108) not being installed generates a greater temperature difference, thereby forming temperature differentiation at two sides of the inlet/outlet ports of the heat gaining device (101);

The mentioned open-loop natural thermal energy releasing system with partial reflux includes a open-loop flowpath with partial reflux configured by at least a heat gaining device (101), a temperature differentiation body (103), at least a pipeline structure (301) and at least a pipeline structure (401); wherein the heat gaining device (101), the pipeline structure (301) and the pipeline structure (401) can be integrally formed or assembled by plural components, and the dimension and shape at each connection location for the assembly is in a gradually-altered shape for forming a smooth state, said smooth state can reduce the damping while the fluid is flowing, thereby facilitating the flow circulation of the fluid;

FIG 4 is a lateral structural view showing the present invention being provided with the linear pipeline structure (301), wherein the bottom thereof being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention;

As shown in FIG. 4, it mainly consists of:
In the open-loop natural thermal energy releasing system with partial reflux, the bottom of the linear pipeline structure (301) is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104);

FIG. 5 is a lateral structural view showing the embodiment shown in FIG 4 being provided with a semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention;

As shown in FIG. 5, it mainly consists of:
In the open-loop natural thermal energy releasing system with partial reflux, the bottom of the linear pipeline structure (301) is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior;

FIG 6 is a lateral structural view showing the embodiment shown in FIG 4 being provided with a space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention;

As shown in FIG 6, it mainly consists of:
In the open-loop natural thermal energy releasing system with partial reflux, the bottom of the linear pipeline structure (301) is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function;

FIG 7 is a lateral structural view showing the present invention being provided with the linear pipeline structure (301), and the pipeline structures (401) of at least two open-loop natural thermal energy releasing systems with partial reflux being staggeringly disposed in the natural thermal energy storage body (100), wherein the bottom of each open-loop natural thermal energy releasing system with partial reflux being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention;

As shown in FIG. 7, it mainly consists of:
In the open-loop natural thermal energy releasing system with partial reflux, the linear pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104);

FIG 8 is a lateral structural view showing the embodiment shown in FIG 7 being provided with a semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention;

As shown in FIG 8, it mainly consists of:
In the open-loop natural thermal energy releasing system with partial reflux, the linear pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for leading to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior;

FIG 9 is a lateral structural view showing the embodiment shown in FIG 7 being provided with a space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention;

As shown in FIG 9, it mainly consists of:
In the open-loop natural thermal energy releasing system with partial reflux, the linear pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG. 10 is a top view showing the cross section of FIG. 7 to FIG. 9 taken along the horizon, according to the present invention.

As shown in FIG. 10, in each set of open-loop natural thermal energy releasing system with partial reflux, the heat gaining devices (101) are staggeringly distributed in the natural thermal energy storage body (100), and two ends thereof are extended to the temperature differentiation body (103) through the pipeline structure (301) and the pipeline structure (401).

According to the embodiment disclosed in FIG. 1, the open-loop natural thermal energy releasing system with partial reflux can be further formed as a jointly-configured structure and provided with a jointly-configured pipeline structure (401), illustrated as followings:
FIG. 11 is a lateral structural view showing two or more than two of the pipeline structures (301) having the radially-expanded root part, wherein the bottom of each root part being installed with an outward-expanding arc-shaped fluid chamber (108), the fluid inlet/outlet port (3011) of individual outward-expanding arc-shaped fluid chamber (108) being leaded to the fluid inlet/outlet port (1011) of the upward-inclined heat gaining device (101), and the fluid inlet/outlet port (1012) of the heat gaining device (101) being connected to the fluid inlet/outlet port (4012) of the shared pipeline structure (401), according to the present invention.

As shown in FIG 11, it mainly consists of:
In the open-loop natural thermal energy releasing system with partial reflux, two or more than two of the pipeline structures (301) having the radially-expanded root part are provided, the bottom of each root part is installed with the outward-expanding arc-shaped fluid chamber (108), the fluid inlet/outlet port (3011) of individual outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of the shared pipeline structure (401).

FIG 12 is a lateral structural view showing the embodiment shown in FIG. 11 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

As shown in FIG. 12, it mainly consists of:
In the open-loop natural thermal energy releasing system with partial reflux, two or more than two of the pipeline structures (301) having the radially-expanded root part are provided, the bottom of each root part is installed with the outward-expanding arc-shaped fluid chamber (108), the fluid inlet/outlet port (3011) of individual outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of the shared pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104).

FIG 13 is a lateral structural view showing the embodiment shown in FIG 11 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

As shown in FIG 13, it mainly consists of:
In the open-loop natural thermal energy releasing system with partial reflux, two or more than two of the pipeline structures (301) having the radially-expanded root part are provided, the bottom of each root part is installed with the outward-expanding arc-shaped fluid chamber (108), the fluid inlet/outlet port (3011) of individual outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of the shared pipeline structure (401), and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior.

FIG 14 is a lateral structural view showing the embodiment shown in FIG. 11 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301), according to the present invention.

As shown in FIG 14, it mainly consists of:
In the open-loop natural thermal energy releasing system with partial reflux, two or more than two of the pipeline structures (301) having the radially-expanded root part are provided, the bottom of each root part is installed with the outward-expanding arc-shaped fluid chamber (108), the fluid inlet/outlet port (3011) of individual outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of the shared pipeline structure (401), and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG. 15 is a top view showing the cross section of FIG.11 to FIG. 14 taken along the horizon, according to the present invention.

As shown in FIG. 15, the pipeline structures (301) are individually distributed in a radial and vertical manner and at the periphery of the shared pipeline structure (401), each individual bottom is leaded to the individual outward-expanding arc-shaped fluid chamber (108), then the fluid inlet/outlet port (3011) of each outward-expanding arc-shaped fluid chamber (108) is leaded to the fluid inlet/outlet port (1011) of the upward-inclined heat gaining device (101), and through a shunt manifold, the fluid inlet/outlet port (1012) of the heat gaining device (101) is leaded to the fluid inlet/outlet port (4011) via the shared pipeline structure (401).

According to the embodiment disclosed in FIG 1, the open-loop natural thermal energy releasing system with partial reflux can be further formed as a jointly-configured structure and provided with a jointly-configured pipeline structure (301), which is illustrated as followings:
FIG. 16 is a lateral structural view showing the present invention being provided with a shared pipeline structure (301), wherein the bottom of the root part is installed with an outward-expanding arc-shaped fluid chamber (108), the individual fluid inlet/outlet port (3011) of the outward-expanding arc-shaped fluid chamber (108) being leaded to the fluid inlet/outlet port (1011) of the upward-inclined heat gaining device (101), and the fluid inlet/outlet port (1012) of the heat gaining device (101) being connected to the fluid inlet/outlet port (4012) of two or more than two of the pipeline structures (401) having the radially-expanded root part.

As shown in FIG. 16, it mainly consists of:
In the open-loop natural thermal energy releasing system with partial reflux, the shared pipeline structure (301) is provided, wherein the bottom of the root part is installed with the outward-expanding arc-shaped fluid chamber (108), the individual fluid inlet/outlet port (3011) of the outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of two or more than two of the pipeline structures (401) having the radially-expanded root part.

FIG. 17 is a lateral structural view showing the embodiment shown in FIG 16 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG 17, it mainly consists of:
In the open-loop natural thermal energy releasing system with partial reflux, the shared pipeline structure (301) is provided, wherein the bottom of the root part is installed with the outward-expanding arc-shaped fluid chamber (108), the individual fluid inlet/outlet port (3011) of the outward-expanding arc-shaped fluid chamber (108) is leaded to the fluid inlet/outlet port (1011) of the upward-inclined heat gaining device (101), the fluid inlet/outlet port (1012) of the heat gaining device (101) is connected to the fluid inlet/outlet port (4012) of two or more than two of the pipeline structures (401) having the radially-expanded root part, and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104).

FIG 18 is a lateral structural view showing the embodiment shown in FIG. 16 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301);

As shown in FIG. 18, it mainly consists of:
In the open-loop natural thermal energy releasing system with partial reflux, the shared pipeline structure (301) is provided, wherein the bottom of the root part is installed with the outward-expanding arc-shaped fluid chamber (108), the individual fluid inlet/outlet port (3011) of the outward-expanding arc-shaped fluid chamber (108) is leaded to the fluid inlet/outlet port (1011) of the upward-inclined heat gaining device (101), the fluid inlet/outlet port (10 12) of the heat gaining device (101) is connected to the fluid inlet/outlet port (4012) of two or more than two of the pipeline structures (401) having the radially-expanded root part, and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104) as well as for exchanging fluid with the exterior.

FIG. 19 is a lateral structural view showing the embodiment shown in FIG. 16 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG 19, it mainly consists of:
In the open-loop natural thermal energy releasing system with partial reflux, the shared pipeline structure (301) is provided, wherein the bottom of the root part is installed with the outward-expanding arc-shaped fluid chamber (108), the individual fluid inlet/outlet port (3011) of the outward-expanding arc-shaped fluid chamber (108) is leaded to the fluid inlet/outlet port (1011) of the upward-inclined heat gaining device (101), the fluid inlet/outlet port (1012) of the heat gaining device (101) is connected to the fluid inlet/outlet port (4012) of two or more than two of the pipeline structures (401) having the radially-expanded root part, and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG. 20 is a top view showing the cross section of FIG 16 to FIG. 19 taken along the horizon, according to the present invention.

As shown in FIG. 20, each fluid inlet/outlet port (3011) is leaded from the outward-expanding arc-shaped fluid chamber (108) installed at the bottom of the shared pipeline structure (301) to the fluid inlet/outlet port (1011) of the individual heat gaining device (101) through the individual manifold which is radially extended, then the fluid inlet/outlet port (1012) of the heat gaining device (101) is leaded to the individual fluid inlet/outlet port (3012) through the vertical pipeline structure (301).

FIG. 21 is a lateral structural view showing the present invention being provided with a linear pipeline structure (301), wherein the bottom thereof being installed with the outward-expanding arc-shaped fluid chamber (108) for being connected to the vertical heat gaining device (101) disposed in the natural thermal energy storage body (100), then the fluid inlet/outlet port (1012) of the heat gaining device (101) being connected to the fluid inlet/outlet port (4012) of the pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) ofthe pipeline structure (301).

As shown in FIG. 21, it mainly consists of:
In the open-loop natural thermal energy releasing system with partial reflux, the linear pipeline structure (301) is provided, wherein the bottom thereof is installed with the outward-expanding arc-shaped fluid chamber (108) for being connected to the vertical heat gaining device (101) disposed in the natural thermal energy storage body (100), then the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) ofthe pipeline structure (301) for accommodating the temperature differentiation body (103) and for guiding the flow direction of the heat exchange fluid (104).

FIG. 22 is a lateral structural view showing the embodiment shown in FIG. 21 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG. 22, it mainly consists of:
In the open-loop natural thermal energy releasing system with partial reflux, the linear pipeline structure (301) is provided, wherein the bottom thereof is installed with the outward-expanding arc-shaped fluid chamber (108) for being connected to the vertical heat gaining device (101) disposed in the natural thermal energy storage body (100), then the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104) as well as for exchanging fluid with the exterior.

FIG. 23 is a lateral structural view showing the embodiment shown in FIG 21 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG 23, it mainly consists of:
In the open-loop natural thermal energy releasing system with partial reflux, the linear pipeline structure (301) is provided, wherein the bottom thereof is installed with the outward-expanding arc-shaped fluid chamber (108) for being connected to the vertical heat gaining device (101) disposed in the natural thermal energy storage body (100), then the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

According to the embodiment disclosed in FIG 2, the open-loop natural thermal energy releasing system with partial reflux can be further formed as a jointly-configured structure and provided with the jointly-configured pipeline structure (401) and heat gaining device (101), illustrated as followings:

FIG. 24 is a lateral structural view showing the present invention being provided with two or more than two of the pipeline structures (301) having the radially-expanded root part, the bottom of each root part being leaded to the outward-expanding arc-shaped fluid chamber (108), then the fluid inlet/outlet port (3011) of the outward-expanding arc-shaped fluid chamber (108) being leaded to the fluid inlet/outlet port (1011) of the shared vertical heat gaining device (101), then the fluid inlet/outlet port (1012) of the shared heat gaining device (101) being connected to the fluid inlet/outlet port (4012) of the shared pipeline structure (401).

As shown in FIG. 24, it mainly consists of:
In the open-loop natural thermal energy releasing system with partial reflux, two or more than two of the pipeline structures (301) having the radially-expanded root part are provided, the bottom of each root part is leaded to the outward-expanding arc-shaped fluid chamber (108), the fluid inlet/outlet port (3011) of the outward-expanding arc-shaped fluid chamber (108) is leaded to the fluid inlet/outlet port (1011) of the shared vertical heat gaining device (101), then the fluid inlet/outlet port (1012) of the shared heat gaining device (101) is connected to the fluid inlet/outlet port (4012) of the shared pipeline structure (401).

FIG. 25 is a lateral structural view showing the embodiment shown in FIG 24 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG. 25, it mainly consists of:
In the open-loop natural thermal energy releasing system with partial reflux, two or more than two of the pipeline structures (301) having the radially-expanded root part are provided, the bottom of each root part is leaded to the outward-expanding arc-shaped fluid chamber (108), the fluid inlet/outlet port (3011) of the outward-expanding arc-shaped fluid chamber (108) is leaded to the fluid inlet/outlet port (1011) of the shared vertical heat gaining device (101), then the fluid inlet/outlet port (1012) of the shared heat gaining device (101) is connected to the fluid inlet/outlet port (4012) of the shared pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104).

FIG 26 is a lateral structural view showing the embodiment shown in FIG 24 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG. 26, it mainly consists of:
In the open-loop natural thermal energy releasing system with partial reflux, two or more than two of the pipeline structures (301) having the radially-expanded root part are provided, the bottom of each root part is leaded to the outward-expanding arc-shaped fluid chamber (108), the fluid inlet/outlet port (3011) of the outward-expanding arc-shaped fluid chamber (108) is leaded to the fluid inlet/outlet port (1011) of the shared vertical heat gaining device (101), then the fluid inlet/outlet port (1012) of the shared heat gaining device (101) is connected to the fluid inlet/outlet port (4012) of the shared pipeline structure (401), and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104) as well as for exchanging fluid with the exterior.

FIG 27 is a lateral structural view showing the embodiment shown in FIG 24 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG 27, it mainly consists of:
In the open-loop natural thermal energy releasing system with partial reflux, two or more than two of the pipeline structures (301) having the radially-expanded root part are provided, the bottom of each root part is leaded to the outward-expanding arc-shaped fluid chamber (108), the fluid inlet/outlet port (3011) of the outward-expanding arc-shaped fluid chamber (108) is leaded to the fluid inlet/outlet port (1011) of the shared vertical heat gaining device (101), then the fluid inlet/outlet port (1012) of the shared heat gaining device (101) is connected to the fluid inlet/outlet port (4012) of the shared pipeline structure (401), and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG 28 is a top view showing the cross section of FIG 24 to FIG 27 taken along the horizon, according to the present invention.

As shown in FIG 28, the bottom of each root part of the radially-expanded pipeline structure (301) is leaded to the shared outward-expanding arc-shaped fluid chamber (108), and leaded upwardly from the outward-expanding arc-shaped fluid chamber (108) to the shared heat gaining device (101) then further upward to the fluid inlet/outlet port (4011) through the shared pipeline structure (401).

According to the embodiment disclosed in FIG 2, the open-loop natural thermal energy releasing system with partial reflux can be further formed as a jointly-configured structure and provided with the jointly-configured pipeline structure (301), illustrated as followings:
FIG. 29 is a lateral structural view showing the present invention being provided with a shared pipeline structures (301) having two or more than two radially-expanded shunt manifolds at the bottom for being individually leaded to the connected outward-expanding arc-shaped fluid chamber (108), the fluid inlet/outlet port (3011) of the outward-expanding arc-shaped fluid chamber (108) being leaded to the fluid inlet/outlet port (1011) of the vertical heat gaining device (101), then the fluid inlet/outlet port (1012) of the heat gaining device (101) being connected to the fluid inlet/outlet port (4012) of the pipeline structure (401).

As shown in FIG 29, it mainly consists of:
In the open-loop natural thermal energy releasing system with partial reflux, the shared pipeline structure (301) is provided and two or more than two radially-expanded shunt manifolds formed at the bottom are individually leaded to the connected outward-expanding arc-shaped fluid chamber (108), the fluid inlet/outlet port (3011) of the outward-expanding arc-shaped fluid chamber (108) is leaded to the fluid inlet/outlet port (1011) of the vertical heat gaining device (101), and the fluid inlet/outlet port (1012) of the heat gaining device (101) is connected to the fluid inlet/outlet port (4012) of the pipeline structure (401).

FIG. 30 is a lateral structural view showing the embodiment shown in FIG 29 being provided with the close-type space limiting and flow direction guiding structure (211) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG. 30, it mainly consists of:
In the open-loop natural thermal energy releasing system with partial reflux, the shared pipeline structure (301) is provided and two or more than two radially-expanded shunt manifolds formed at the bottom are individually leaded to the connected outward-expanding arc-shaped fluid chamber (108), the fluid inlet/outlet port (3011) of the outward-expanding arc-shaped fluid chamber (108) is leaded to the fluid inlet/outlet port (1011) of the vertical heat gaining device (101), and the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104).

FIG 31 is a lateral structural view showing the embodiment shown in FIG 29 being provided with the semi-close type space limiting and flow direction guiding structure (212) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG. 31, it mainly consists of:
In the open-loop natural thermal energy releasing system with partial reflux, the shared pipeline structure (301) is provided and two or more than two radially-expanded shunt manifolds formed at the bottom are individually leaded to the connected outward-expanding arc-shaped fluid chamber (108), the fluid inlet/outlet port (3011) of the outward-expanding arc-shaped fluid chamber (108) is leaded to the fluid inlet/outlet port (1011) of the vertical heat gaining device (101), and the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104) as well as for exchanging fluid with the exterior.

FIG. 32 is a lateral structural view showing the embodiment shown in FIG 29 being provided with the space limiting and flow direction guiding structure capable of controlling the door opening or closing (213) installed between the fluid inlet/outlet port (4011) of the heat exchange fluid (104) of the pipeline structure (401) and the fluid inlet/outlet port (3012) of the heat exchange fluid (104) of the pipeline structure (301).

As shown in FIG 32, it mainly consists of:
In the open-loop natural thermal energy releasing system with partial reflux, the shared pipeline structure (301) is provided and two or more than two radially-expanded shunt manifolds formed at the bottom are individually leaded to the connected outward-expanding arc-shaped fluid chamber (108), the fluid inlet/outlet port (3011) of the outward-expanding arc-shaped fluid chamber (108) is leaded to the fluid inlet/outlet port (1011) of the vertical heat gaining device (101), and the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG. 33 is a top view showing the cross section of FIG. 29 to FIG 32 taken along the horizon, according to the present invention.

As shown in FIG. 33, the bottom of the shared pipeline structure (301) is installed with individual radially-expanded shunt manifold for being individually connected to the outward-expanding arc-shaped fluid chamber (108), the individual outward-expanding arc-shaped fluid chamber (108) is then connected to the vertical heat gaining device (101), and then the heat gaining device (101) is connected to the fluid inlet/outlet port (4011) through the vertical pipeline structure (401).

FIG. 34 is a lateral structural view showing the present invention being provided with the arc-shaped pipeline structure (301), wherein the bottom thereof being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG 34, it mainly consists of:
In the open-loop natural thermal energy releasing system with partial reflux, the bottom of the arc-shaped pipeline structure (301) is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104);

FIG. 35 is a lateral structural view showing the embodiment shown in FIG 34 being provided with a semi-close type space limiting and flow direction guiding structure (212) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG. 35, it mainly consists of:
In the open-loop natural thermal energy releasing system with partial reflux, the bottom of the arc-shaped pipeline structure (301) is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior;

FIG 36 is a lateral structural view showing the embodiment shown in FIG 34 being provided with a space limiting and flow direction guiding structure capable of controlling the door opening or closing (213) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG. 36, it mainly consists of:
In the open-loop natural thermal energy releasing system with partial reflux, the bottom of the arc-shaped pipeline structure (301) is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function;

FIG. 37 is a lateral structural view showing the present invention being provided with the arc-shaped pipeline structure (301), and the pipeline structures (301) of at least two open-loop natural thermal energy releasing systems with partial reflux being staggeringly disposed in the natural thermal energy storage body (100), wherein the bottom of each open-loop natural thermal energy releasing system with partial reflux being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG. 37, it mainly consists of:
In the open-loop natural thermal energy releasing system with partial reflux, the arc-shaped pipeline structure (301) is installed, and the pipeline structures (301) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104);

FIG. 38 is a lateral structural view showing the embodiment shown in FIG 37 being provided with a semi-close type space limiting and flow direction guiding structure (212) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG. 38, it mainly consists of:
In the open-loop natural thermal energy releasing system with partial reflux, the arc-shaped pipeline structure (301) is installed, and the pipeline structures (301) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior;

FIG. 39 is a lateral structural view showing the embodiment shown in FIG 37 being provided with a space limiting and flow direction guiding structure capable of controlling the door opening or closing (213) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG 39, it mainly consists of:
In the open-loop natural thermal energy releasing system with partial reflux, the arc-shaped pipeline structure (301) is installed, and the pipeline structures (301) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG 40 is a top view showing the cross section of FIG 37 to FIG 39 taken along the horizon, according to the present invention.

As shown in FIG 40, in each set of the open-loop natural thermal energy releasing system with partial reflux, the heat gaining devices (101) are staggeringly distributed in the natural thermal energy storage body (100), and two ends thereof are extended to the temperature differentiation body (103) through the pipeline structure (301) and the pipeline structure (401).

FIG. 41 is a lateral structural view showing the present invention being provided with the arc-shaped pipeline structure (301), and the pipeline structures (401) of at least two open-loop natural thermal energy releasing systems with partial reflux being staggeringly disposed in the natural thermal energy storage body (100), wherein the bottom of each open-loop natural thermal energy releasing system with partial reflux being installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) being connected to the fluid inlet/outlet port (4012) of the pipeline structure (401), and a close-type space limiting and flow direction guiding structure (211) being installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG. 41, it mainly consists of:
In the open-loop natural thermal energy releasing system with partial reflux, the arc-shaped pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the close-type space limiting and flow direction guiding structure (211) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104);

FIG 42 is a lateral structural view showing the embodiment shown in FIG 41 being provided with a semi-close type space limiting and flow direction guiding structure (212) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG 42, it mainly consists of:
In the open-loop natural thermal energy releasing system with partial reflux, the arc-shaped pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the semi-close type space limiting and flow direction guiding structure (212) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior;

FIG. 43 is a lateral structural view showing the embodiment shown in FIG. 41 being provided with a space limiting and flow direction guiding structure capable of controlling the door opening or closing (213) installed between the fluid inlet/outlet port (4011) of the heat exchange fluid (104) of the arc-shaped pipeline structure (401) and the fluid inlet/outlet port (3012) of the heat exchange fluid (104) of the pipeline structure (301), according to the present invention;

As shown in FIG 43, it mainly consists of:
In the open-loop natural thermal energy releasing system with partial reflux, the arc-shaped pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and the space limiting and flow direction guiding structure capable of controlling the door opening or closing (213) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

FIG 44 is a top view showing the cross section of FIG 41 to FIG 43 taken along the horizon, according to the present invention.

As shown in FIG. 44, in each set of the open-loop natural thermal energy releasing system with partial reflux, the heat gaining devices (101) are staggeringly distributed in the natural thermal energy storage body (100), and two ends thereof are extended to the temperature differentiation body (103) through the pipeline structure (301) and the pipeline structure (401).

FIG. 45 is a schematic view showing a maintenance entrance (250) and a maintenance stair passage (251) being further provided, according to one embodiment of the present invention.

As shown in FIG. 45, it mainly consists of:
When the open-loop natural thermal energy releasing system with partial reflux is desired to be enlarged and expanded, with considerations of the convenience for personnel entering for maintenance, a maintenance entrance (250) and a maintenance stair passage (251) can be further provided for allowing the personnel and equipments to enter;
   --Maintenance entrance (250): which is constituted by a door or cover capable of being opened or closed and installed at one or both of the pipeline structure (301) and the pipeline structure (401);
   --Stair passage (251): which is constituted by a stair structure installed along the interior of the pipe wall of the pipeline structure (301) or the pipeline structure (401) and crossing over the outward-expanding arc-shaped fluid chamber (108) for allowing personnel to climb and walk thereon.

In the open-loop natural thermal energy releasing system with partial reflux, an auxiliary fluid pump (107) can be further provided and in series installed in the open-loop flowpath with partial reflux configured by the heat gaining device (101), the pipeline structure (301) and the pipeline structure (401) for actively controlling the auxiliary fluid pump (107) to pump in the normal direction or pump in the reverse direction or stop operation.

FIG 46 is a lateral structural view showing the cross section in which an auxiliary fluid pump (107) being installed in the interior of the flowpath segment configured by the heat gaining device (101) and the pipeline structure (401), according to one embodiment of the present invention.

As shown in FIG 46, wherein:
--Auxiliary fluid pump (107): which is constituted by a fluid pump driven by a motor driven by electric power externally supplied through a power wire (118) or a fluid pump driven by natural forces, provided for being in series connected to the mentioned close-type circulation flowpath for pumping the heat exchange fluid (104); the auxiliary fluid pump (107) includes a fixed single-direction pumping operation, or direction-selectable pumping operation, and being controlled to ON/OFF, changing speed or the amount of flow pumping;
   The operation functions thereof include: the auxiliary fluid pump (107) is not operated, and the heat exchange fluid (104) circulates due to the cold descending/hot ascending effect; or actively controlling the auxiliary fluid pump (107) to pump in the normal direction for performing auxiliary pumping in the same direction as the cold descending/hot ascending flow direction of the heat exchange fluid (104); or actively controlling the auxiliary fluid pump (107) to pump in the reverse direction for performing reverse pumping in the direction opposite to the cold descending/hot ascending flow direction of the heat exchange fluid (104);
   In the open-loop natural thermal energy releasing system with partial reflux, one or more than one of the auxiliary heating/cooling devices (115) can be further provided for increasing the thermal energy transmitted to the temperature differentiation body (103) from the heat releasing device (201).
   FIG. 47 is a lateral structural view showing the cross section in which an auxiliary heating/cooling device (115) being installed in the interior or the exterior of the flowpath segment configured by the heat gaining device (101) and the pipeline structure (401), according to one embodiment of the preset invention.
   As shown in FIG 47, wherein:
--Auxiliary heating/cooling device (115): which is driven by the electric power provided from a power wire (116), including being constituted by an electrothermal device capable of converting electric energy into thermal energy; or constituted by a temperature regulation device capable of converting electric energy into thermal energy or converting electric energy into cool energy, or being constituted by a semiconductor chip capable of converting electric energy into thermal energy or cool energy, and installed in the flowpath of the open-loop natural thermal energy releasing system with partial reflux, and disposed at a location capable of generating kinetic power for assisting the heat exchange fluid (104) to perform hot ascending/cold descending and relatively would not influence the flow of heat exchange fluid (104); the installation means includes one or more than one of the following means: 1) fixedly installed in the open-loop flowpath; 2) disposed in the pipeline structure (401) or heat gaining device (101); 3) surroundingly or partially installed at the exterior of the open-loop flowpath with partial reflux made of a heat conductive material, for indirectly heating or cooling the heat exchange fluid (104) in the flowpath;
   FIG 48 is a lateral structural view showing the cross section in which the interior of the flowpath segment configured by the heat gaining device (101) and the pipeline structure (401) being installed with the auxiliary fluid pump (107), and the interior or the exterior being installed with the auxiliary heating/cooling device (115), according to one embodiment of the present invention.
   As shown in FIG. 48, wherein:
--Auxiliary fluid pump (107): which is constituted by a fluid pump driven by a motor driven by electric power externally supplied through a power wire (118) or a fluid pump driven by natural forces, provided for being in series connected in the mentioned close-type circulation flowpath for pumping the heat exchange fluid (104); the auxiliary fluid pump (107) includes a fixed single-direction pumping operation, or direction-selectable pumping operation, and being controlled to ON/OFF, changing speed or the amount of flow pumping;
   The operation functions thereof include: the auxiliary fluid pump (107) is not operated, and the heat exchange fluid (104) circulates due to the cold descending/hot ascending effect; or actively controlling the auxiliary fluid pump (107) to pump in the normal direction for performing auxiliary pumping in the same direction as the cold descending/hot ascending flow direction of the heat exchange fluid (104); or actively controlling the auxiliary fluid pump (107) to pump in the reverse direction for performing reverse pumping in the direction opposite to the cold descending/hot ascending flow direction of the heat exchange fluid (104);
--Auxiliary heating/cooling device (115): which is driven by the electric power provided from a power wire (116), including being constituted by an electrothermal device capable of converting electric energy into thermal energy; or constituted by a temperature regulation device capable of converting electric energy into thermal energy or converting electric energy into cool energy or being constituted by a semiconductor chip capable of converting electric energy into thermal energy or cool energy, and installed in the flowpath of the open-loop natural thermal energy releasing system with partial reflux, and disposed at a location capable of generating kinetic power for assisting the heat exchange fluid (104) to perform hot ascending/cold descending and relatively would not influence the flow of heat exchange fluid (104); the installation means includes one or more than one of the following means: 1) fixedly installed in the open-loop flowpath; 2) disposed in the pipeline structure (401) or heat gaining device (101); 3) surroundingly or partially installed at the exterior of the open-loop flowpath with partial reflux made of a heat conductive material, for indirectly heating or cooling the heat exchange fluid (104) in the flowpath;

In the open-loop natural thermal energy releasing system with partial reflux, one or both of the auxiliary fluid pump (107) and the auxiliary heating/cooling device (115) can be further installed, and one or both of a heat exchange fluid temperature sensing device (TS201) and an environment temperature sensing device (TS202) can be installed, wherein the auxiliary fluid pump (107), the auxiliary heating/cooling device (115), the heat exchange fluid temperature sensing device (TS201) and the environment temperature sensing device (TS202) can be controlled through operations of manually reading or setting in a power supply state, or can be controlled through setting in a power supply state by the installation of the electric power control unit (ECU200);

FIG. 49 is a schematic view showing the present invention being installed with the electric power control unit (ECU200), the heat exchange fluid temperature sensing device (TS201) and the environment temperature sensing device (TS202) for controlling the auxiliary fluid pump (107), according to one embodiment of the present invention.

As shown in FIG. 49, wherein:
By installing one or more than one of the heat exchange fluid temperature sensing device (TS201) in the open-loop flowpath with partial reflux, and utilizing a signal transmission wire (120) to transmit the detected temperature value of the heat exchange fluid to the electric power control unit (ECU200), and installing the environment temperature sensing device (TS202), and utilizing the signal transmission wire (120) to feedback the detected temperature value to the electric power control unit (ECU200), the timing for supplying power for operation and the amount of flow pumping and pumping direction of the auxiliary fluid pump (107) can be controlled by the electric power control unit (ECU200) with respect to the internal setting and the feedback signals of the heat exchange fluid temperature sensing device (TS201) and the environment temperature sensing device (TS202); wherein:
   --Electric power control unit (ECU200): which is constituted by electromechanical components or electric circuit components or micro processors or related software, the interior is equipped with operation parameter setting and with respect to the signals sent by the heat exchange fluid temperature sensing device (TS201) and the environment temperature sensing device (TS202) for controlling the timing for supplying power for operation and the amount of flow pumping and pumping direction of the auxiliary fluid pump (107);
   -- Heat exchange fluid temperature sensing device (TS201) and Environment temperature sensing device (TS202): which are constituted by one or more than one of temperature sensing devices capable of converting the temperature variation into an analog or digital electric power signal, and installed at temperature sensing points or environment temperature sensing points selectively set in the open-type flowpath with partial reflux for transmitting the signal to the electric power control unit (ECU200) through the signal transmission wire (120);
      The mentioned environment temperature sensing device (TS202) can be optionally installed according to actual needs.
      FIG 50 is a schematic view showing the present invention being installed with the electric power control unit (ECU200), the heat exchange fluid temperature sensing device (TS201) and the environment temperature sensing device (TS202) for controlling the auxiliary heating/cooling device (115), according to one embodiment of the present invention.
      As shown in FIG 50, wherein:
      By installing one or more than one of the heat exchange fluid temperature sensing device (TS201) in the open-loop flowpath with partial reflux, and utilizing a signal transmission wire (120) to transmit the detected temperature value of the heat exchange fluid to the electric power control unit (ECU200), and installing the environment temperature sensing device (TS202), and utilizing the signal transmission wire (120) to feedback the detected temperature value to the electric power control unit (ECU200), the timing for supplying power for heating and heating values of the auxiliary heating/cooling device (115) can be controlled by the electric power control unit (ECU200) with respect to the internal setting and the feedback signals of the heat exchange fluid temperature sensing device (TS201) and the environment temperature sensing device (TS202); wherein:
   --Electric power control unit (ECU200): which is constituted by electromechanical components or electric circuit components or micro processors or related software, the interior is equipped with operation parameter setting and with respect to the signals sent by the heat exchange fluid temperature sensing device (TS201) and the environment temperature sensing device (TS202) for controlling the timing for supplying power for heating and heating values of the auxiliary heating/cooling device (115);
   -- Heat exchange fluid temperature sensing device (TS201) and Environment temperature sensing device (TS202): which are constituted by one or more than one of temperature sensing devices capable of converting the temperature variation into an analog or digital electric power signal, and installed at temperature sensing points or environment temperature sensing points selectively set in the open-type flowpath with partial reflux for transmitting the signal to the electric power control unit (ECU200) through the signal transmission wire (120);
      The mentioned environment temperature sensing device (TS202) can be optionally installed according to actual needs.
      FIG. 51 is a schematic view showing the present invention being installed with the electric power control unit (ECU200), the heat exchange fluid temperature sensing device (TS201) and the environment temperature sensing device (TS202) for controlling the auxiliary fluid pump (107) and the auxiliary heating/cooling device (115), according to one embodiment of the present invention.
      As shown in FIG. 51, wherein:
      By installing one or more than one of the heat exchange fluid temperature sensing device (TS201) in the open-loop flowpath with partial reflux, and utilizing a signal transmission wire (120) to transmit the detected temperature value of the heat exchange fluid to the electric power control unit (ECU200), and installing the environment temperature sensing device (TS202), and utilizing the signal transmission wire (120) to feedback the detected temperature value to the electric power control unit (ECU200), the timing for supplying power for operation and the amount of flow pumping and pumping direction of the auxiliary fluid pump (107) and the timing for supplying power for heating and heating values of the auxiliary heating/cooling device (115) can be controlled by the electric power control unit (ECU200) with respect to the internal setting and the feedback signals of the heat exchange fluid temperature sensing device (TS201) and the environment temperature sensing device (TS202); wherein:
   --Electric power control unit (ECU200): which is constituted by electromechanical components or electric circuit components or micro processors or related software, the interior is equipped with operation parameter setting and with respect to the signals sent by the heat exchange fluid temperature sensing device (TS201) and the environment temperature sensing device (TS202) for controlling the timing for supplying power for operation and the amount of flow pumping and pumping direction of the auxiliary fluid pump (107) and the timing for supplying power for heating and heating values of the auxiliary heating/cooling device (115);
   -- Heat exchange fluid temperature sensing device (TS201) and Environment temperature sensing device (TS202): which are constituted by one or more than one of temperature sensing devices capable of converting the temperature variation into an analog or digital electric power signal, and installed at temperature sensing points or environment temperature sensing points selectively set in the open-type flowpath with partial reflux for transmitting the signal to the electric power control unit (ECU200) through the signal transmission wire (120);
      The mentioned environment temperature sensing device (TS202) can be optionally installed according to actual needs.
      According to the present invention, the open-loop natural thermal energy releasing system with partial reflux can be applied to release energy to the gaseous or solid or liquid object to be received with heat releasing, wherein: the temperature differentiation body (103) enclosed by the close-type space limiting and flow direction guiding structure (211), the semi-close type space limiting and flow direction guiding structure (212) and the space limiting and flow direction guiding structure capable of controlling the door opening or closing (213) includes the solid temperature differentiation body (103) such as a road surface, roof, wall, floor of a building, or the gaseous temperature differentiation body (103) such as air inside a green house, or air inside a house or the liquid temperature differentiation body (103) such as water in a lake, or equipment or structural body desired to be heated for freeze preventing.

## Claims

1. An open-loop natural thermal energy releasing system with partial reflux, wherein it is to utilize the thermal energy of a natural thermal energy storage body (100) to be transmitted to a heat exchange fluid (104) in a heat gaining device (101) installed at the bottom of the open-loop natural thermal energy releasing system with partial reflux, and with the cold descending/hot ascending effect provided by the heat exchange fluid (104) after being processed with temperature equalization or the pumping of an auxiliary fluid pump, the heat exchange fluid (104) in the heat gaining device (101) is enabled to release the thermal energy in the omni-direction or in a set direction from a fluid inlet/outlet port (4011) of a pipeline structure (401) to the interior of a space limiting and flow direction guiding structure (201) to be received with the heat releasing from the heat exchange fluid (104), and the main features includes one or more than one of the 1) to 7) structural devices including: 1) installing the space limiting and flow direction guiding structure (201) of the heat exchange fluid (104) between the fluid inlet/outlet port (4011) of the pipeline structure (401) and a fluid inlet/outlet port (3012) of a pipeline structure (301) for allowing the heat exchange fluid (104) with thermal energy to be released from the fluid inlet/outlet port (4011) of the pipeline structure (401), and a part thereof is returned to the fluid inlet/outlet port (3012) of the pipeline structure (301) for flowing back to the heat gaining device (101); 2) installing an outward-expanding arc-shaped fluid chamber (108) at one or more than one of turning locations of the open-loop flowpath configured by the heat gaining device (101), the pipeline structure (301), the space limiting and flow direction guiding structure (201) and the pipeline structure (401) for temporally storing a part of the heat exchange fluid (104) and moderating the flow speed of the heat exchange fluid (104) with thermal energy for reducing the flow damping of the flowpath to the heat exchange fluid (104); 3) installing an auxiliary heating/cooling device (115); 4) installing an auxiliary fluid pump (107); 5) installing a heat exchange fluid temperature sensing device (TS201); 6) installing an environment temperature sensing device (TS202); and 7) installing an electric power control unit (ECU200).

2. An open-loop natural thermal energy releasing system with partial reflux as claimed in claim 1, wherein an outward-expanding arc-shaped fluid chamber (108) is installed between the linear pipeline structure (301) and the heat gaining device (101) for being leaded to the upward-inclined heat gaining device (101) and the pipeline structure (401), and the mentioned heat gaining device (101) is installed in a natural thermal energy storage body (100) which is constituted by a solid or liquid thermal energy storage body having greater and stable thermal energy storage capacity such as a stratum, ground, lake, pool, river, desert, berg and ocean;
The fluid inlet/outlet port (1011) of the heat gaining device (101) is leaded to the fluid inlet/outlet port (3012) and a protection net and protection cover device for fluid inlet/outlet port (1010) through the pipeline structure (301); another fluid inlet/outlet port (1012) of the heat gaining device (101) is leaded to the temperature differentiation body (103) through the fluid inlet/outlet port (4011) of the pipeline structure (401) and the protection net and protection cover device for fluid inlet/outlet port (1010), such that the heat exchange fluid (104) passing the heat gaining device (101) is enabled to configure an open-loop flowpath with partial reflux through the pipeline structures (301), (401) and the temperature differentiation body (103) for releasing the thermal energy to the temperature differentiation body (103); the heat exchange fluid (104) is made of a gaseous or liquid fluid having heat storage and conduction properties; the temperature differentiation body (103) is a space or structure having certain functions and configured by gas or solid or liquid, for receiving the thermal energy released by the heat exchange fluid during the system operation;
Features of main components are as followings:
--Heat gaining device (101): which is made of a material having good heat conductivity, and provided with a flowpath structure jointly configured by one or more than one flowpaths; or structured by a conduit structure jointly configured by one or more than one flowpaths, wherein the flowpath cross section defined as A-A is a pipe-like structure having the cross section formed in round shape or other geometric shapes, the interior or exterior thereof can be installed with thermal conductive fin sheets having no negative influence to the flowing fluid and installed in the natural thermal energy storage body (100) with an upward inclined means; two ends of the flowpath of the heat gaining device (101) respectively have a fluid inlet/outlet port (1011), (1012) for being respectively connected to one end of the pipeline structure (301) and one end of the pipeline structure (401) so as to be leaded to the temperature differentiation body (103) for forming the open-loop flowpath with partial reflux, the flowpath inside the heat gaining device (101) is upward inclined with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to cooperate with the heat exchange fluid (104) to generate a hot ascending/cold descending effect;
--Pipeline structure (301): which is constituted by a fluid pipeline structure having one or more than one flowpaths in round shape or other geometric shapes, the cross section of pipeline structure is defined as a C-C cross section having round or other geometric shapes, the pipeline structure (301) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (301) is formed with one or more than one fluid inlet/outlet ports (3011) for being communicated with the fluid inlet/outlet port (1011) of the heat gaining device (101) having one or more than one flowpaths; the other end of the pipeline structure (301) is formed with one or more than one fluid inlet/outlet ports (3012) which are jointly configured for being leaded to the protection net and protection cover device for fluid inlet/outlet port (1010) for transporting the heat exchange fluid (104);
--Pipeline structure (401): which is constituted by a fluid pipeline structure having one or more than one flowpaths in round shape or other geometric shapes, the cross section of pipeline structure is defined as a D-D cross section having round or other geometric shapes, the pipeline structure (401) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (401) is formed with one or more than one fluid inlet/outlet ports (4012) for being communicated with the fluid inlet/outlet port (1012) of the heat gaining device (101) having one or more than one flowpaths; the other end of the pipeline structure (401) is formed with one or more than one fluid inlet/outlet ports (4011) for being leaded to the protection net and protection cover device for fluid inlet/outlet port (1010) for transporting the heat exchange fluid (104);
-- Outward-expanding arc-shaped fluid chamber (108): which is constituted by an outward-expanding arc-shaped flowpath structure formed at one or more than one of the turning locations of the open-loop type flowpath configured by the heat gaining device (101), the pipeline structure (301), the temperature differentiation body (103) and the pipeline structure (401), for temporally storing a part of the heat exchange fluid (104) and moderating the flow speed of the heat exchange fluid (104) with thermal energy thereby reducing the flow damping of the open-loop type flowpath to the heat exchange fluid (104);
The volume of the fluid stored in the outward-expanding arc-shaped fluid chamber (108) installed close to the fluid inlet/outlet port of the heat gaining device (101) is relatively larger, therefore the total heat capacity is larger, when the heat gaining device (101) introduces thermal energy from the temperature differentiation body which is disposed at the exterior and in contact with said device, the thermal energy is transmitted towards two sides through the fluid, the fluid at the side where the outward-expanding arc-shaped fluid chamber (108) being installed on the heat gaining device (101) generates a smaller temperature difference, the other side where the outward-expanding arc-shaped fluid chamber (108) not being installed generates a greater temperature difference, thereby forming temperature differentiation at two sides of the inlet/outlet ports of the heat gaining device (101);
The mentioned open-loop natural thermal energy releasing system with partial reflux includes at least a heat gaining device (101), at least a pipeline structure (301) and at least a pipeline structure (401); wherein the heat gaining device (101), the pipeline structure (301) and the pipeline structure (401) can be integrally formed or assembled by plural components, and the dimension and shape at each connection location for the assembly is in a gradually-altered shape for forming a smooth state, said smooth state can reduce the damping while the fluid is flowing, thereby facilitating the flow circulation of the fluid.

3. An open-loop natural thermal energy releasing system with partial reflux as claimed in claim 1, wherein the outward-expanding arc-shaped fluid chamber (108) is installed between the linear pipeline structure (301) and the heat gaining device (101) for being leaded to the vertical heat gaining device (101) and the pipeline structure (401), and mentioned heat gaining device (101) is installed in a natural thermal energy storage body (100) which is constituted by a solid or liquid thermal energy storage body having greater and stable thermal energy storage capacity such as a stratum, ground, lake, pool, river, desert, berg and ocean;
The fluid inlet/outlet port (1011) of the heat gaining device (101) is leaded to the fluid inlet/outlet port (3012) and a protection net and protection cover device for fluid inlet/outlet port (1010) through the pipeline structure (301), another fluid inlet/outlet port (1012) of the heat gaining device (101) is leaded to the temperature differentiation body (103) through the fluid inlet/outlet port (4011) of the pipeline structure (401) and the protection net and protection cover device for fluid inlet/outlet port (1010), such that the heat exchange fluid (104) passing the heat gaining device (101) is enabled to configure an open-loop flowpath with partial reflux through the pipeline structures (301), (401) and the temperature differentiation body (103) for releasing the thermal energy to the temperature differentiation body (103); the heat exchange fluid (104) is made of a gaseous or liquid fluid having heat storage and conduction properties; the temperature differentiation body (103) is a space or structure having certain functions and configured by gas or solid or liquid, for receiving the thermal energy released by the heat exchange fluid during the system operation;
Features of main components are as followings:
--Heat gaining device (101): which is made of a material having good heat conductivity, and provided with a flowpath structure jointly configured by one or more than one flowpaths; or structured by a conduit structure jointly configured by one or more than one flowpaths, wherein the flowpath cross section defined as A-A is a pipe-like structure having the cross section formed in round shape or other geometric shapes, the interior or exterior thereof can be installed with thermal conductive fin sheets having no negative influence to the flowing fluid and installed in the natural thermal energy storage body (100) with a vertical means; two ends of the flowpath of the heat gaining device (101) respectively have a fluid inlet/outlet port (1011), (1012) for being respectively connected to one end of the pipeline structure (301) and one end of the pipeline structure (401) so as to be leaded to the temperature differentiation body (103) for forming the open-loop flowpath with partial reflux, the flowpath inside the heat gaining device (101) is vertical with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to cooperate with the heat exchange fluid (104) to generate a hot ascending/cold descending effect;
--Pipeline structure (301): which is constituted by a fluid pipeline structure having one or more than one flowpaths in round shape or other geometric shapes, the cross section of pipeline structure is defined as a C-C cross section having round or other geometric shapes, the pipeline structure (301) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (301) is formed with one or more than one fluid inlet/outlet ports (3011) for being communicated with the fluid inlet/outlet port (1011) of the heat gaining device (101) having one or more than one flowpaths; the other end of the pipeline structure (301) is formed with one or more than one fluid inlet/outlet ports (3012) which are jointly configured for being leaded to the protection net and protection cover device for fluid inlet/outlet port (1010) for transporting the heat exchange fluid (104);
--Pipeline structure (401): which is constituted by a fluid pipeline structure having one or more than one flowpaths in round shape or other geometric shapes, the cross section of pipeline structure is defined as a D-D cross section having round or other geometric shapes, the pipeline structure (401) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (401) is formed with one or more than one fluid inlet/outlet ports (4012) for being communicated with the fluid inlet/outlet port (1012) of the heat gaining device (101) having one or more than one flowpaths; the other end of the pipeline structure (401) is formed with one or more than one fluid inlet/outlet ports (4011) for being leaded to the protection net and protection cover device for fluid inlet/outlet port (1010) for transporting the heat exchange fluid (104);
-- Outward-expanding arc-shaped fluid chamber (108): which is constituted by an outward-expanding arc-shaped flowpath structure formed at one or more than one of the turning locations of the open-loop type flowpath configured by the heat gaining device (101), the pipeline structure (301), the temperature differentiation body (103) and the pipeline structure (401), for temporally storing a part of the heat exchange fluid (104) and moderating the flow speed of the heat exchange fluid (104) with thermal energy thereby reducing the flow damping of the open-loop type flowpath to the heat exchange fluid (104);
The volume of the fluid stored in the outward-expanding arc-shaped fluid chamber (108) installed close to the fluid inlet/outlet port of the heat gaining device (101) is relatively larger, therefore the total heat capacity is larger, when the heat gaining device (101) introduces thermal energy from the temperature differentiation body which is disposed at the exterior and in contact with said device, the thermal energy is transmitted towards two sides through the fluid, the fluid at the side where the outward-expanding arc-shaped fluid chamber (108) being installed on the heat gaining device (101) generates a smaller temperature difference, the other side where the outward-expanding arc-shaped fluid chamber (108) not being installed generates a greater temperature difference, thereby forming temperature differentiation at two sides of the inlet/outlet ports of the heat gaining device (101);
The mentioned open-loop natural thermal energy releasing system with partial reflux includes at least a heat gaining device (101), at least a pipeline structure (301) and at least a pipeline structure (401); wherein the heat gaining device (101), the pipeline structure (301) and the pipeline structure (401) can be integrally formed or assembled by plural components, and the dimension and shape at each connection location for the assembly is in a gradually-altered shape for forming a smooth state, said smooth state can reduce the damping while the fluid is flowing, thereby facilitating the flow circulation of the fluid.

4. An open-loop natural thermal energy releasing system with partial reflux as claimed in claim 1, wherein the outward-expanding arc-shaped fluid chamber (108) is installed between the arc-shaped pipeline structure (301) and the heat gaining device (101) for being leaded to the upward-inclined heat gaining device (101) and the arc-shaped pipeline structure (401), and mentioned heat gaining device (101) is installed in a natural thermal energy storage body (100) which is constituted by a solid or liquid thermal energy storage body having greater and stable thermal energy storage capacity such as a stratum, ground, lake, pool, river, desert, berg and ocean;
The fluid inlet/outlet port (1011) of the heat gaining device (101) is leaded to the fluid inlet/outlet port (3012) and a protection net and protection cover device for fluid inlet/outlet port (1010) through the pipeline structure (301), another fluid inlet/outlet port (1012) of the heat gaining device (101) is leaded to the temperature differentiation body (103) through the fluid inlet/outlet port (4011) of the pipeline structure (401) and the protection net and protection cover device for fluid inlet/outlet port (1010), such that the heat exchange fluid (104) passing the heat gaining device (101) is enabled to configure a open-loop flowpath with partial reflux through the pipeline structures (301), (401) and the temperature differentiation body (103) for releasing the thermal energy to the temperature differentiation body (103); the heat exchange fluid (104) is made of a gaseous or liquid fluid having heat storage and conduction properties; the temperature differentiation body (103) is a space or structure having certain functions and configured by gas or solid or liquid, for receiving the thermal energy released by the heat exchange fluid during the system operation;
Features of main components are as followings:
--Heat gaining device (101): which is made of a material having good heat conductivity, and provided with a flowpath structure jointly configured by one or more than one flowpaths; or structured by a conduit structure jointly configured by one or more than one flowpaths, wherein the flowpath cross section defined as A-A is a pipe-like structure having the cross section formed in round shape or other geometric shapes, the interior or exterior thereof can be installed with thermal conductive fin sheets having no negative influence to the flowing fluid and installed in the natural thermal energy storage body (100) with an upward inclined means; two ends of the flowpath of the heat gaining device (101) respectively have a fluid inlet/outlet port (1011), (1012) for being respectively connected to one end of the pipeline structure (301) and one end of the pipeline structure (401) so as to be leaded to the temperature differentiation body (103) for forming the open-loop flowpath with partial reflux, the flowpath inside the heat gaining device (101) is upward-inclined with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to cooperate with the heat exchange fluid (104) to generate a hot ascending/cold descending effect;
--Pipeline structure (301): which is constituted by a fluid pipeline structure having one or more than one flowpaths in round shape or other geometric shapes, the cross section of pipeline structure is defined as a C-C cross section having round or other geometric shapes, the pipeline structure (301) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (301) is formed with one or more than one fluid inlet/outlet ports (3011) for being communicated with the fluid inlet/outlet port (1011) of the heat gaining device (101) having one or more than one flowpaths; the other end of the pipeline structure (301) is formed with one or more than one fluid inlet/outlet ports (3012) which are jointly configured for being leaded to the protection net and protection cover device for fluid inlet/outlet port (1010) for transporting the heat exchange fluid (104);
--Pipeline structure (401): which is constituted by a fluid pipeline structure having one or more than one flowpaths in round shape or other geometric shapes, the cross section of pipeline structure is defined as a D-D cross section having round or other geometric shapes, the pipeline structure (401) is configured by one or more than one of the following means: 1) configured by a material having good heat conductivity; 2) configured by a material having good heat conductivity, and the exterior of the whole or a part of the pipeline segment is covered by a heat insulation member (109); 3) configured by a pipe-like structure or building structural body having good heat conductivity; one end of the pipeline structure (401) is formed with one or more than one fluid inlet/outlet ports (4012) for being communicated with the fluid inlet/outlet port (1012) of the heat gaining device (101) having one or more than one flowpaths; the other end of the pipeline structure (401) is formed with one or more than one fluid inlet/outlet ports (4011) for being leaded to the protection net and protection cover device for fluid inlet/outlet port (1010) for transporting the heat exchange fluid (104);
-- Outward-expanding arc-shaped fluid chamber (108): which is constituted by an outward-expanding arc-shaped flowpath structure formed at one or more than one of the turning locations of the open-loop type flowpath configured by the heat gaining device (101), the pipeline structure (301), the temperature differentiation body (103) and the pipeline structure (401), for temporally storing a part of the heat exchange fluid (104) and moderating the flow speed of the heat exchange fluid (104) with thermal energy thereby reducing the flow damping of the open-loop type flowpath to the heat exchange fluid (104);
The volume of the fluid stored in the outward-expanding arc-shaped fluid chamber (108) installed close to the fluid inlet/outlet port of the heat gaining device (101) is relatively larger, therefore the total heat capacity is larger, when the heat gaining device (101) introduces thermal energy from the temperature differentiation body which is disposed at the exterior and in contact with said device, the thermal energy is transmitted towards two sides through the fluid, the fluid at the side where the outward-expanding arc-shaped fluid chamber (108) being installed on the heat gaining device (101) generates a smaller temperature difference, the other side where the outward-expanding arc-shaped fluid chamber (108) not being installed generates a greater temperature difference, thereby forming temperature differentiation at two sides of the inlet/outlet ports of the heat gaining device (101);
The mentioned open-loop natural thermal energy releasing system with partial reflux includes a open-loop flowpath with partial reflux configured by at least a heat gaining device (101), a temperature differentiation body (103), at least a pipeline structure (301) and at least a pipeline structure (401); wherein the heat gaining device (101), the pipeline structure (301) and the pipeline structure (401) can be integrally formed or assembled by plural components, and the dimension and shape at each connection location for the assembly is in a gradually-altered shape for forming a smooth state, said smooth state can reduce the damping while the fluid is flowing, thereby facilitating the flow circulation of the fluid.

5. An open-loop natural thermal energy releasing system with partial reflux as claimed in claim 2, wherein a space limiting and flow direction guiding structure is installed between the fluid inlet/outlet port (4011) of the heat exchange fluid (104) of the pipeline structure (401) and the fluid inlet/outlet port (3012) of the heat exchange fluid (104) of the pipeline structure (301), including: 1) the close-type space limiting and flow direction guiding structure (211) for accommodating the temperature differentiation body (103) and for guiding the flow direction of the heat exchange fluid (104); 2) the semi-close type space limiting and flow direction guiding structure (212) for accommodating the temperature differentiation body (103) and for guiding the flow direction of the heat exchange fluid (104), as well as for exchanging fluid with the exterior; 3) a space limiting and flow direction guiding structure capable of controlling the door opening or closing (213) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

6. An open-loop natural thermal energy releasing system with partial reflux as claimed in claim 2, wherein the linear pipeline structure (301) is installed, and the pipeline structures (401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and a space limiting and flow direction guiding structure is installed between the fluid inlet/outlet port (4011) of the heat exchange fluid (104) of the pipeline structure (401) and the fluid inlet/outlet port (3012) of the heat exchange fluid (104) of the pipeline structure (301), including: 1) the close-type space limiting and flow direction guiding structure (211) for accommodating the temperature differentiation body (103) and for guiding the flow direction of the heat exchange fluid (104); or 2) the semi-close type space limiting and flow direction guiding structure (212) for accommodating the temperature differentiation body (103) and for guiding the flow direction of the heat exchange fluid (104), as well as for exchanging fluid with the exterior; or 3) a space limiting and flow direction guiding structure capable of controlling the door opening or closing (213) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

7. An open-loop natural thermal energy releasing system with partial reflux as claimed in claim 2, wherein it further can be formed as a jointly-configured structure and provided with a jointly-configured pipeline structure (401), and it is mainly constituted as follows:
The open-loop natural thermal energy releasing system with partial reflux is provided with two or more than two of the pipeline structures (301) having the radially-expanded root part, the bottom of each root part is installed with the outward-expanding arc-shaped fluid chamber (108), the fluid inlet/outlet port (3011) of individual outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of the shared pipeline structure (401), and wherein the pipeline structures (301) are individually distributed in a radial and vertical manner and at the periphery of the shared pipeline structure (401), each individual bottom is leaded to the individual outward-expanding arc-shaped fluid chamber (108), then the fluid inlet/outlet port (3011) of each outward-expanding arc-shaped fluid chamber (108) is leaded to the fluid inlet/outlet port (1011) of the upward-inclined heat gaining device (101), and through a shunt manifold, the fluid inlet/outlet port (1012) of the heat gaining device (101) is leaded to the fluid inlet/outlet port (4011) via the shared pipeline structure (401).

8. An open-loop natural thermal energy releasing system with partial reflux as claimed in claim 2, wherein it further can be formed as a jointly-configured structure and provided with a jointly-configured pipeline structure (301), and it is mainly constituted as follows:
In the open-loop natural thermal energy releasing system with partial reflux, the shared pipeline structure (301) is provided, wherein the bottom of the root part is installed with the outward-expanding arc-shaped fluid chamber (108), the individual fluid inlet/outlet port (3011) of the outward-expanding arc-shaped fluid chamber (108) is leaded to the fluid inlet/outlet port (1011) of the upward-inclined heat gaining device (101), and the fluid inlet/outlet port (1012) of the heat gaining device (101) is connected to the fluid inlet/outlet port (4012) of two or more than two of the pipeline structures (401) having the radially-expanded root part, and wherein each fluid inlet/outlet port (3011) is leaded from the outward-expanding arc-shaped fluid chamber (108) installed at the bottom of the shared pipeline structure (301) to the fluid inlet/outlet port (1011) of the individual heat gaining device (101) through the individual manifold which is radially extended, then the fluid inlet/outlet port (1012) of the heat gaining device (101) is leaded to the individual fluid inlet/outlet port (3012) through the vertical pipeline structure (301).

9. An open-loop natural thermal energy releasing system with partial reflux as claimed in claim 3, wherein it further can be formed as a jointly-configured structure and provided with the jointly-configured pipeline structure (401) and heat gaining device (101), and it is mainly constituted as follows:
In the open-loop natural thermal energy releasing system with partial reflux, two or more than two of the pipeline structures (301) having the radially-expanded root part are provided, the bottom of each root part is leaded to the outward-expanding arc-shaped fluid chamber (108), the fluid inlet/outlet port (3011) of the outward-expanding arc-shaped fluid chamber (108) is leaded to the fluid inlet/outlet port (1011) of the shared vertical heat gaining device (101), then the fluid inlet/outlet port (1012) of the shared heat gaining device (101) is connected to the fluid inlet/outlet port (4012) of the shared pipeline structure (401), and wherein the bottom of each root part of the radially-expanded pipeline structure (301) is leaded to the shared outward-expanding arc-shaped fluid chamber (108), and leaded upwardly from the outward-expanding arc-shaped fluid chamber (108) to the shared heat gaining device (101) then further upward to the fluid inlet/outlet port (4011) through the shared pipeline structure (401).

10. An open-loop natural thermal energy releasing system with partial reflux as claimed in claim 9, wherein it further can be formed as a jointly-configured structure and provided with the jointly-configured pipeline structure (301), and it is mainly constituted as follows:
In the open-loop natural thermal energy releasing system with partial reflux, the shared pipeline structure (301) is provided and two or more than two radially-expanded shunt manifolds formed at the bottom are individually leaded to the connected outward-expanding arc-shaped fluid chamber (108), the fluid inlet/outlet port (3011) of the outward-expanding arc-shaped fluid chamber (108) is leaded to the fluid inlet/outlet port (1011) of the vertical heat gaining device (101), and the fluid inlet/outlet port (1012) of the heat gaining device (101) is connected to the fluid inlet/outlet port (4012) of the pipeline structure (401), and wherein the bottom of the shared pipeline structure (301) is installed with individual radially-expanded shunt manifold for being individually connected to the outward-expanding arc-shaped fluid chamber (108), the individual outward-expanding arc-shaped fluid chamber (108) is then connected to the vertical heat gaining device (101), and then the heat gaining device (101) is connected to the fluid inlet/outlet port (4011) through the vertical pipeline structure (401).

11. An open-loop natural thermal energy releasing system with partial reflux as claimed in claims 3, 7, 8, 9 or 10, wherein it is further provided with a space limiting and flow direction guiding structure, including: 1) the close-type space limiting and flow direction guiding structure (211) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); or 2) the semi-close type space limiting and flow direction guiding structure (212) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104) as well as for exchanging fluid with the exterior; or 3) the space limiting and flow direction guiding structure capable of controlling the door opening or closing (213) is installed between the fluid inlet/outlet port (4011) of the heat exchange fluid (104) of the pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

12. An open-loop natural thermal energy releasing system with partial reflux as claimed in claim 4, wherein it is further provided with a space limiting and flow direction guiding structure, including: 1) the close-type space limiting and flow direction guiding structure (211) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); or 2) the semi-close type space limiting and flow direction guiding structure (212) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior; or 3) the space limiting and flow direction guiding structure capable of controlling the door opening or closing (213) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

13. An open-loop natural thermal energy releasing system with partial reflux as claimed in claim 4, wherein it is further provided with the arc-shaped pipeline structure (301), and the pipeline structures (301, or 401) of at least two open-loop natural thermal energy releasing systems with partial reflux are staggeringly disposed in the natural thermal energy storage body (100), wherein the bottom of each open-loop natural thermal energy releasing system with partial reflux is installed with the outward-expanding arc-shaped fluid chamber (108) for being leaded to the upward-inclined heat gaining device (101) disposed in the natural thermal energy storage device (100), and the fluid inlet/outlet port (1012) of the heat gaining device (101) is connected to the fluid inlet/outlet port (4012) of the pipeline structure (401), and wherein in each set of the open-loop natural thermal energy releasing system with partial reflux, the heat gaining devices (101) are staggeringly distributed in the natural thermal energy storage body (100), and two ends thereof are extended to the temperature differentiation body (103) through the pipeline structure (301) and the pipeline structure (401), and the spacing limiting and flow direction guiding structure is further installed, including: 1) the close-type space limiting and flow direction guiding structure (211) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); or 2) the semi-close type space limiting and flow direction guiding structure (212) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104), as well as for exchanging fluid with the exterior; or 3) the space limiting and flow direction guiding structure capable of controlling the door opening or closing (213) is installed between the fluid inlet/outlet port (4011) of the heat exchange fluid (104) of the arc-shaped pipeline structure (401) and the fluid inlet/outlet port (3012) of the heat exchange fluid (104) of the pipeline structure (301) for accommodating the temperature differentiation body (103) and for guiding the flow direction of the heat exchange fluid (104); wherein the space limiting and flow direction guiding structure capable of controlling the door opening or closing (213) is capable of controlling the door opening or closing for allowing the limited space to be equipped with the close-type or semi-close type operational function.

14. An open-loop natural thermal energy releasing system with partial reflux as claimed in claim 1, wherein the interior of the flowpath segment configured by the heat gaining device (101) and the pipeline structure (401) is installed with the auxiliary fluid pump (107), and both or one of the interior or the exterior thereof is installed with the auxiliary heating/cooling device (115), wherein:
--Auxiliary fluid pump (107): which is constituted by a fluid pump driven by a motor driven by electric power externally supplied through a power wire (118) or a fluid pump driven by natural forces, provided for being in series connected in the mentioned open-loop type flowpath for pumping the heat exchange fluid (104); the auxiliary fluid pump (107) includes a fixed single-direction pumping operation, or direction-selectable pumping operation, and being controlled to ON/OFF, changing speed or the amount of flow pumping;
The operation functions thereof include: the auxiliary fluid pump (107) is not operated, and the heat exchange fluid (104) circulates due to the cold descending/hot ascending effect; or actively controlling the auxiliary fluid pump (107) to pump in the normal direction for performing auxiliary pumping in the same direction as the cold descending/hot ascending flow direction of the heat exchange fluid (104); or actively controlling the auxiliary fluid pump (107) to pump in the reverse direction for performing reverse pumping in the direction opposite to the cold descending/hot ascending flow direction of the heat exchange fluid (104);
--Auxiliary heating/cooling device (115): which is driven by the electric power provided from a power wire (116), including being constituted by an electrothermal device capable of converting electric energy into thermal energy; or constituted by a temperature regulation device capable of converting electric energy into thermal energy or converting electric energy into cool energy or being constituted by a semiconductor chip capable of converting electric energy into thermal energy or cool energy, and installed in the flowpath of the open-loop natural thermal energy releasing system with partial reflux, and disposed at a location capable of generating kinetic power for assisting the heat exchange fluid (104) to perform hot ascending/cold descending and relatively would not influence the flow of heat exchange fluid (104); the installation means includes one or more than one of the following means: 1) fixedly installed in the open-loop flowpath; 2) disposed in the pipeline structure (401) or heat gaining device (101); 3) surroundingly or partially installed at the exterior of the open-loop flowpath with partial reflux made of a heat conductive material, for indirectly heating or cooling the heat exchange fluid (104) in the flowpath.

15. An open-loop natural thermal energy releasing system with partial reflux as claimed in claim 1, wherein one or both of the auxiliary fluid pump (107) and the auxiliary heating/cooling device (115) can be further installed, and one or both of a heat exchange fluid temperature sensing device (TS201) and an environment temperature sensing device (TS202) can be installed, wherein the auxiliary fluid pump (107), the auxiliary heating/cooling device (115), the heat exchange fluid temperature sensing device (TS201) and the environment temperature sensing device (TS202) can be controlled through operations of manually reading or setting in a power supply state, or can be controlled through setting in a power supply state by the installation of the electric power control unit (ECU200), wherein:
By installing one or more than one of the heat exchange fluid temperature sensing device (TS201) in the open-loop flowpath with partial reflux, and utilizing a signal transmission wire (120) to transmit the detected temperature value of the heat exchange fluid to the electric power control unit (ECU200), and installing the environment temperature sensing device (TS202), and utilizing the signal transmission wire (120) to feedback the detected temperature value to the electric power control unit (ECU200), the timing for supplying power for operation and the amount of flow pumping and pumping direction of the auxiliary fluid pump (107) can be controlled by the electric power control unit (ECU200) with respect to the internal setting and the feedback signals of the heat exchange fluid temperature sensing device (TS201) and the environment temperature sensing device (TS202); wherein:
--Electric power control unit (ECU200): which is constituted by electromechanical components or electric circuit components or micro processors or related software, the interior is equipped with operation parameter setting and with respect to the signals sent by the heat exchange fluid temperature sensing device (TS201) and the environment temperature sensing device (TS202) for controlling the timing for supplying power for operation and the amount of flow pumping and pumping direction of the auxiliary fluid pump (107);
-- Heat exchange fluid temperature sensing device (TS201) and Environment temperature sensing device (TS202): which are constituted by one or more than one of temperature sensing devices capable of converting the temperature variation into an analog or digital electric power signal, and installed at temperature sensing points or environment temperature sensing points selectively set in the open-type flowpath with partial reflux for transmitting the signal to the electric power control unit (ECU200) through the signal transmission wire (120);
The mentioned environment temperature sensing device (TS202) can be optionally installed according to actual needs.
